(19) Europäisches Patentamt
European Patent Office
Office européen des brevets

(11) Veröffentlichungsnummer: **0 354 409**
**A1**

(12) **EUROPÄISCHE PATENTANMELDUNG**

(21) Anmeldenummer: **89113740.8**

(22) Anmeldetag: **25.07.89**

(51) Int. Cl.4: **C09B 62/08 , C09B 62/507 , D06P 1/38**

Patentansprüche für folgenden Vertragsstaat: ES.

(30) Priorität: **28.07.88 DE 3825658**

(43) Veröffentlichungstag der Anmeldung: **14.02.90 Patentblatt 90/07**

(84) Benannte Vertragsstaaten: **BE CH DE ES FR GB IT LI**

(71) Anmelder: **HOECHST AKTIENGESELLSCHAFT**
**Postfach 80 03 20**
**D-6230 Frankfurt am Main 80(DE)**

(72) Erfinder: **Springer, Hartmut, Dr.**
**Am Erdbeerstein 27**
**D-6240 Königstein Taunus(DE)**
Erfinder: **Hussong, Kurt, Dr.**
**Am Flachsland 56**
**D-6233 Kelkheim (Taunus)(DE)**
Erfinder: **Hähnle, Reinhard, Dr.**
**Kastanienweg 7a**
**D-6240 Königstein Taunus(DE)**
Erfinder: **Russ, Werner Hubert, Dr.**
**Berliner Strasse 10**
**D-6238 Hofheim am Taunus(DE)**

(54) **Wasserlösliche faserreaktive Farbstoffe, Verfahren zu ihrer Herstellung und ihre Verwendung.**

(57) Wasserlösliche Farbstoffe, die ein- oder zweimal die faserreaktive Gruppe der Formel

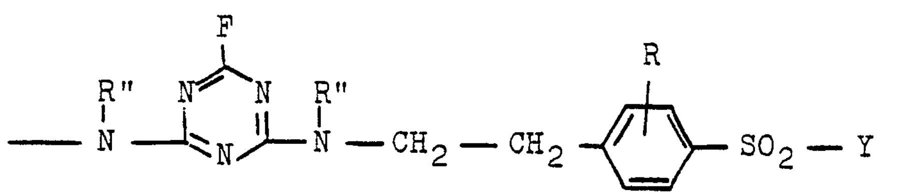

(3)

enthalten, in welcher R″ jedes ein Wasserstoffatom oder eine Alkylgruppe von 1 bis 4 C-Atomen ist, wobei beide R″ eine zueinander gleiche oder voneinander verschiedene Bedeutung besitzen können, R ein Wasserstoffatom oder eine Sulfogruppe bedeutet und Y die Vinylgruppe oder eine ß-Sulfatoethyl-Gruppe ist.

Mit diesen neuen Farbstoffen lassen sich hydroxy- und/oder carbonamidgruppenhaltige Materialien, insbesondere Fasermaterialien, wie insbesondere Cellulosefasermaterialien, in echten Tönen färben.

EP 0 354 409 A1

## Wasserlösliche faserreaktive Farbstoffe, Verfahren zu ihrer Herstellung und ihre Verwendung

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, die verbesserte Eigenschaften, insbesondere in Bezug auf die Echtheiten, aufweisen. So sind zwar bspw. aus den US-Patentschriften Nrs. 4 515 598 und 4 649 193, der britischen Patentschrift Nr. 1 576 237, den Europäischen Patentanmeldungs-Veröffentlichungen Nrs. 0 070 806A und 0 070 808A und den deutschen Offenlegungsschriften Nrs. 33 27 641, 35 26 551 und 36 28 090 faserreaktive Farbstoffe bekannt, gleichwohl lag der vorliegenden Erfindung die Aufgabe zugrunde, neue, verbesserte Reaktivfarbstoffe zu finden, die Baumwolle in allen Farbtönen färben. Die neuen Farbstoffe sollten sich vor allem durch eine hohe Faser-Farbstoff-Bindungsstabilität auszeichnen und sollten besonders für das Färben nach dem Klotzverfahren geeignet sein; desweiteren sollten sich die nicht auf der Faser fixierten Anteile leicht auswaschen lassen. Desweiteren mußten die mit den neuen Farbstoffen erhältlichen Färbungen gute Allgemeinechtheiten, beispielsweise gute Licht- und Naßechtheiten, besitzen.

Mit der vorliegenden Erfindung wurde diese Aufgabe durch Auffindung der Verbindungen der allgemeinen Formel (1) gelöst.

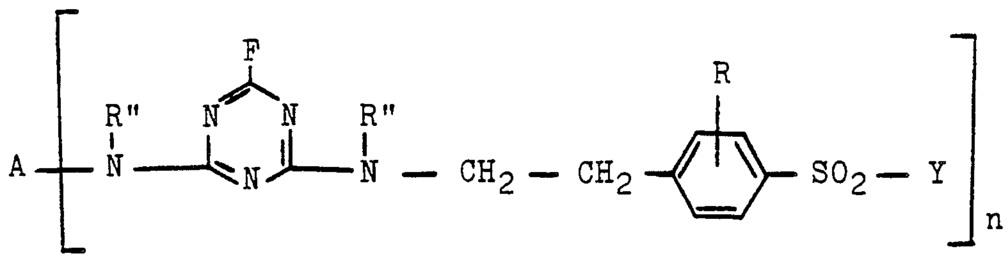

(1)

In dieser Formel bedeuten:

A ist ein Rest eines Farbstoffes, bevorzugt eines wasserlöslichen sulfogruppenhaltigen Farbstoffes und bevorzugt aus der Azoreihe, hiervon insbesondere der Rest eines sulfogruppenhaltigen Monoazo- oder Disazofarbstoffes;

n ist die Zahl 1 oder 2, bevorzugt 1;

R″ ist ein Wasserstoffatom oder eine Alkylgruppe von 1 bis 4 C-Atomen;

R ist ein Wasserstoffatom oder eine Sulfogruppe;

Y ist die Vinylgruppe oder bevorzugt eine ß-Sulfatoethyl-Gruppe der allgemeinen Formel (2)

$-CH_2-CH_2-OSO_3M$ (2)

in welcher

M für ein Wasserstoffatom oder ein Alkalimetall, wie Natrium, Kalium oder Lithium, steht.

Bevorzugt sind Farbstoffe der allgemeinen Formel (1), die insgesamt 1 bis 6 Sulfogruppen besitzen. Die Farbstoffreste A können ferner weitere übliche faserreaktive Gruppen enthalten.

Farbstoffe mit dem Rest A bzw. die den Verbindungen der allgemeinen Formel (1) zugrunde liegenden Farbstoffe mit einer Aminogruppe -NHR″ sind in der Literatur zahlreich beschrieben, so beispielsweise in den anfangs genannten Offenlegungsschriften und Patentschriften, in der europäischen Patentanmeldungs-Veröffentlichung Nr. 0 076 782A und desweiteren in Venkataraman, The Chemistry of Synthetic Dyes, New York, London, 1972, Band VI, Seiten 213-297. Besonders wertvolle Farbstoffe dieser Reihe sind wasserlösliche Azofarbstoffe, insbesondere solche, die Sulfo- und/oder Carboxygruppen aufweisen, insbesondere sulfogruppenhaltige Mono- und Disazofarbstoffe, und Metallkomplexfarbstoffe, wie sulfogruppenhaltige 1:1-Kupferkomplex-Monoazo- und -Disazofarbstoffe. Alkylgruppen R″ sind beispielsweise die n-Butyl-, n-Propyl- und die Ethylgruppe, vorzugsweise die Methylgruppe. Bevorzugt ist R″ ein Wasserstoffatom.

Der Formelrest R ist bevorzugt ein Wasserstoffatom. Ist R eine Sulfogruppe, so steht sie bevorzugt in m-Stellung zur Gruppe $-SO_2-Y$.

Wichtige Azofarbstoffe entsprechend der allgemeinen Formel (1) sind solche, in denen A einen Rest eines Farbstoffes der Benzol-azo-naphthol-, der Benzol-azo-1-phenyl-5-pyrazolon, der Benzol-azo-benzol-, der Naphthalin-azo-benzol-, der Benzol-azo-aminonaphthalin-, der Naphthalinazo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Die vorliegende Erfindung betrifft somit insbesondere wasserlösliche, sulfogruppenhaltige Azofarbstoffe, die die faserreaktive Gruppe Z der allgemeinen Formel (3)

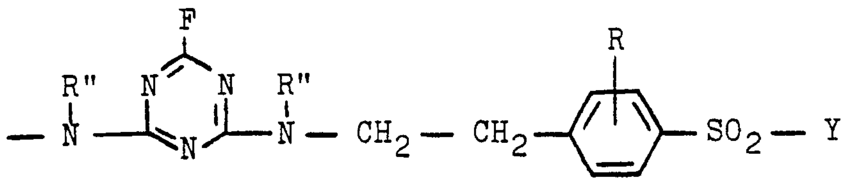

(3)

in welcher R″, R und Y die obengenannten Bedeutungen haben, einmal oder zweimal enthalten.

Solche Azofarbstoffe der allgemeinen Formel (1) sind beispielsweise Farbstoffe der allgemeinen Formeln (4a), (4b) und (4c)

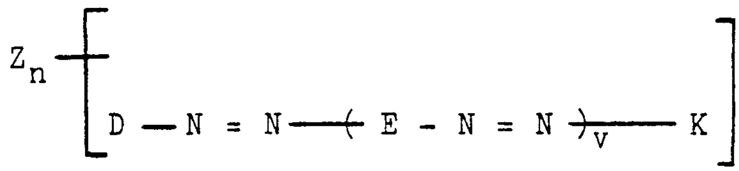

(4a)

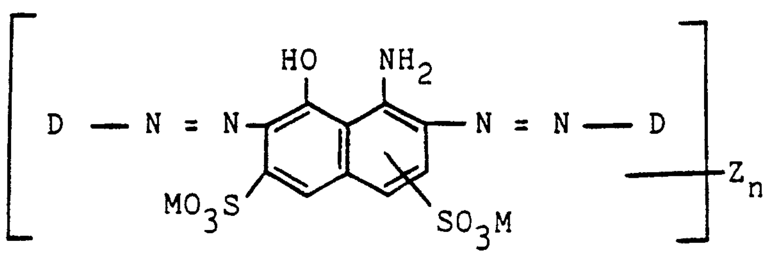

(4b)

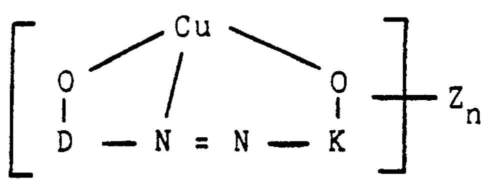

(4c)

in welchen D jeweils für den Rest einer Diazokomponente steht, die zueinander gleiche oder voneinander verschiedene Bedeutungen besitzen können, E den bivalenten Rest einer kupplungsfähigen und diazotierbaren Verbindung und K den Rest einer Kupplungskomponente bedeuten, v für die Zahl Null oder 1 steht, Z einen Rest der allgemeinen Formel (3) bedeutet, n die Zahl 1 oder 2, bevorzugt 1, ist und der Rest Z an den Rest D oder den Rest K oder im Falle von n = 2 jeweils an D und K bzw. an beide D gebunden ist und M die obengenannte Bedeutung besitzt.

Aromatische Reste D der Diazokomponenten $D-NH_2$ der Anilin-und Aminonaphthalinreihe, die keine faserreaktive Gruppe der allgemeinen Formel (3) tragen, sind beispielsweise solche der Amine der allgemeinen Formeln (5a) und (5b)

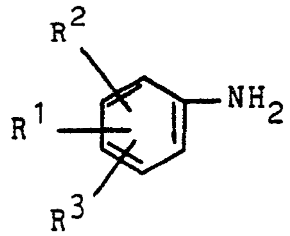

(5a)

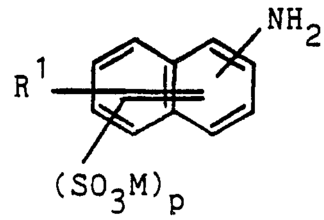

(5b)

in welchen

$R^1$ ein Wasserstoffatom, eine Sulfogruppe oder eine Gruppe der allgemeinen Formel $-SO_2-Y$ mit Y der obengenannten Bedeutung ist,

$R^2$ Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

wobei der Benzolkern in Formel (5a) auch zusätzlich in ortho-Stellung zur Aminogruppe eine Hydroxygruppe enthalten kann,

p die Zahl Null, 1 oder 2 bedeutet (wobei diese Gruppe im Falle von p gleich Null ein Wasserstoffatom bedeutet) und

M die obengenannte Bedeutung hat.

Bevorzugt ist hiervon $R^2$ gleich Wasserstoff, Methyl, Methoxy, Brom, Chlor, Carboxy und Sulfo sowie $R^3$ gleich Wasserstoff, Methyl, Methoxy, Chlor, Carboxy, Sulfo und Acetylamino.

Die Substituenten "Sulfo", "Carboxy", "Phosphato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ und Sulfatogruppen Gruppen entsprechend der allgemeinen Formel $-OSO_3M$ , jeweils mit M der obengenannten Bedeutung.

Aromatische Amine der allgemeinen Formel $D-NH_2$ entsprechend den Formeln (5a) und (5b) sind beispielsweise: 2-Amino- oder 4-Aminobenzoesäure, 3-Amino-benzoesäure, 3-Chloranilin-6-carbonsäure, Anilin-2- oder -3- oder -4-sulfonsäure, 2,5-Disulfo-anilin, 2,4-Disulfo-anilin, 3,5-Disulfoanilin, 2-Aminotoluol-4-sulfonsäure, 2-Amino-anisol-4-sulfonsäure, 2-Amino-anisol-5-sulfonsäure, 4-Amino-anisol-2-sulfonsäure, 2-Ethoxy-anilin-5-sulfonsäure, 2-Ethoxy-anilin-4-sulfonsäure, 4-Sulfo-2-aminobenzoesäure, 2,5-Dimethoxy-anilin-4-sulfonsäure, 2,4-Dimethoxyanilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Brom-anilin-4-sulfonsäure, 2,6-Dichloranilin-4-sulfonsäure, 2,6-Dimethylanilin-3-sulfonsäure oder -4-sulfonsäure, 3-Acetylamino-6-sulfoanilin, 4-Acetyl-amino-2-sulfo-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure, 4-(ß-Sulfatoethylsulfonyl)-anilin, 3-(ß-Sulfatoethylsulfonyl)-anilin, 2-Sulfo-5-(ß-sulfatoethylsulfonyl)-anilin, 2-Sulfo-4-(ß-sulfatoethylsulfonyl)-anilin, 2-Methoxy-5-(ß-sulfatoethylsulfonyl)-anilin, 2-Methoxy-5-methyl-4-(ß-sulfatoethylsulfonyl)-anilin, 2,5-Dimethoxy-4-(ß-sulfatoethylsulfonyl)-anilin, 2-Amino-5-(ß-sulfatoethylsulfonyl)-phenol, 2-Amino-4-(ß-sulfatoethylsulfonyl)-phenol, 2-Amino-6-(ß-sulfatoethylsulfonyl)-naphthalin-8-sulfonsäure, 2-Amino-8-(ß-sulfatoethylsulfonyl)-naphthalin-6-sulfonsäure, 2-Amino-5-(ß-sulfatoethylsulfonyl)-naphthalin-7-sulfonsäure und 2-Amino-7-(ß-sulfatoethylsulfonyl)-naphthalin-5-sulfonsäure.

Aromatische Amine der Diazokomponente $Z-D-NH_2$ der Anilinreihe mit dem faserreaktiven Rest Z gehen von aromatischen Aminen der allgemeinen Formel (6)

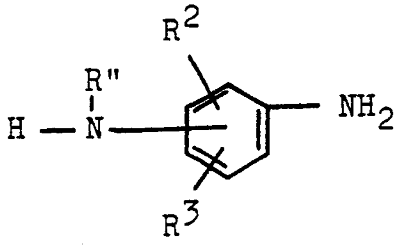

(6)

aus, in welcher $R''$, $R^2$ und $R^3$ die oben angegebenen, insbesondere bevorzugten Bedeutungen haben.

Amine der allgemeinen Formel (6) sind beispielsweise: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,5-Diamino-4-methylbenzol-2-sulfonsäure, 1,5-Diamino-4-methoxybenzol-2-sulfonsäure, 1,3-Diaminobenzol-5-sulfonsäure und 1,3-Diamino-5-methylbenzol.

Bevorzugte Reste D sind demnach in Formeln (4a) und (4b) solche der allgemeinen Formeln (5c), (5d) und (5g) und in Formel (4c) solche der allgemeinen Formeln (5e), (5f) und (5h):

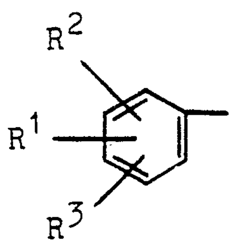

(5c)

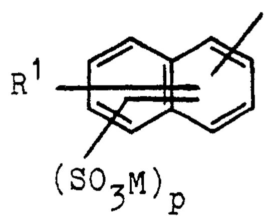

(5d)

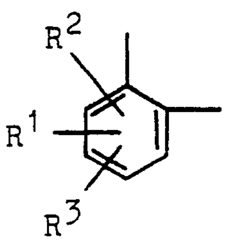

(5e)

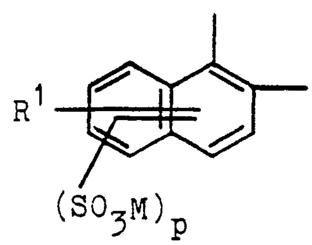

(5f)

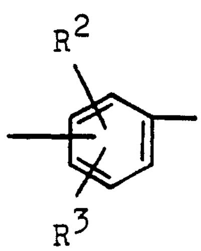

(5g)

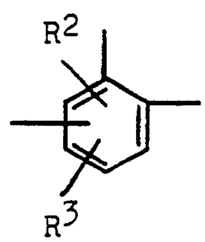

(5h)

in welchen $R^1$, $R^2$, $R^3$, p und M die obengenannten Bedeutungen haben.

Aromatische Reste E einer kupplungsfähigen und diazotierbaren Verbindung der Anilin- und Aminonaphthalinreihe leiten sich beispielsweise von Aminen der allgemeinen Formeln (7a) und (7b)

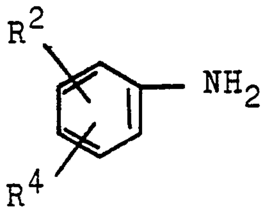

(7a)

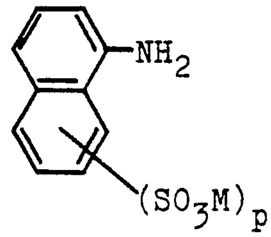

(7b)

ab, in welchen
$R^2$ und M die oben angegebenen Bedeutungen haben,
$R^4$ ein Wasserstoffatom, eine Alkylgruppe von 1 bis 4 C-Atomen, wie die Methyl- oder Ethylgruppe, eine Alkoxygruppe von 1 bis 4 C-Atomen, wie die Methoxy- und Ethoxygruppe, ein Chloratom, eine Alkanoylaminogruppe von 2 bis 5 C-Atomen, wie die Acetylamino- und Propionylaminogruppe, die Benzoylaminogruppe, die Ureidogruppe, eine Phenylureidogruppe, eine Alkylureidogruppe mit 1 bis 4 C-Atomen im Alkylrest, eine Phenylsulfonylgruppe oder eine Alkylsulfonylgruppe von 1 bis 4 C-Atomen ist und
p für die Zahl Null, 1 oder 2 steht (wobei diese Gruppe im Falle von p gleich Null ein Wasserstoffatom bedeutet).

Solche Verbindungen sind beispielsweise:
Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetyl-aminobenzol-1-sulfonsäure, 1-Aminonaphthalin, 1-Aminonaphthalin-6- oder -7- oder -8-sulfonsäure, 3-Acetylaminoanilin, 2-Methylanilin, 2-Methoxyanilin, 3-Benzoylamino-anilin, 2,3-Dimethylanilin, 3,5-Dimethylanilin, 1-Amino-2-methoxy-5-acetylamino-benzol.

Die Reste K der Kupplungskomponente entstammen vorzugsweise der Anilin-, Naphthalin-, Pyrazol- und Acylacetarylid-Reihe; sie können faserreaktive Gruppen besitzen.

Kupplungskomponenten der Formel H-K der Anilin- und Naphthalinreihe sind beispielsweise die Aniline, N-mono-und N,N-disubstituierte Aniline, m-Phenylendiamine und deren Derivate, Naphtholsulfonsäuren, Aminonaphthaline, Naphthole, Hydroxynaphthoesäurederivate, Aminonaphthalinsulfonsäuren oder Aminonaphtholsulfonsäuren.

Kupplungskomponenten der Formel H-K , die keine faserreaktive Gruppe der allgemeinen Formel (3) tragen, sind beispielsweise Verbindungen der allgemeinen Formeln (8a), (8b), (8c), (8d) und (8e)

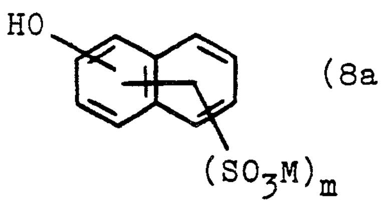

(8a)

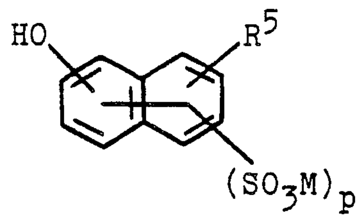

(8b)

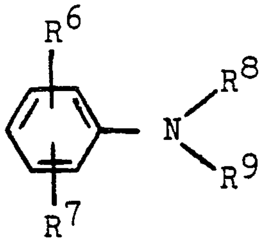

(8c)

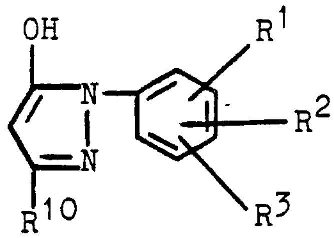

(8d)

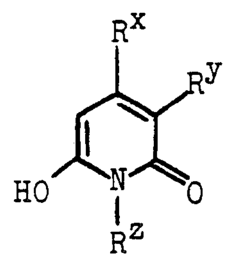

(8e)

in welchen
$R^1$, $R^2$, $R^3$, p und M die obengenannten Bedeutungen haben,
m für die Zahl Null, 1, 2 oder 3 steht (wobei diese Gruppe im Falle m gleich Null ein Wasserstoffatom bedeutet),
$R^5$ Alkylureido mit Alkylgruppen von 1 bis 6 C-Atomen, Phenylureido, im Phenylrest durch Chlor, Methyl,

Methoxy, Nitro, Sulfo und/oder Carboxy substituiertes Phenylureido, Alkanoylamino von 2 bis 7 C-Atomen, wie beispielsweise Acetylamino und Propionylamino, Cyclohexanoylamino, Benzoylamino oder im Benzolrest durch Chlor, Methyl, Methoxy, Nitro, Sulfo und/oder Carboxy substituiertes Benzoylamino bedeutet,

$R^6$ Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,

$R^7$ Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, eine Ureido- oder Phenylureidogruppe ist,

$R^8$ Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,

$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,

$R^{10}$ für Wasserstoff, Alkyl von 1 bis 4 C-Atomen, wie Methyl, Cyano, Carboxy, Carbalkoxy von 2 bis 5 C-Atomen, Carbonamido oder Phenyl steht,

$R^x$ ein Wasserstoffatom oder eine Alkylgruppe von 1 bis 4 C-Atomen, wie die Methylgruppe, oder eine durch Alkoxy von 1 bis 4 C-Atomen, wie Methoxy, oder Cyano substituierte Alkylgruppe von 1 bis 4 C-Atomen ist,

$R^y$ ein Wasserstoffatom, eine Sulfogruppe oder eine Sulfoalkylgruppe mit einem Alkylenrest von 1 bis 4 C-Atomen, wie die Sulfomethylengruppe, oder eine Cyano-oder Carbamoylgruppe ist und

$R^z$ ein Wasserstoffatom oder eine Alkylgruppe von 1 bis 6 C-Atomen, bevorzugt von 1 bis 4 C-Atomen, die durch Phenyl, Sulfo oder Sulfophenyl substituiert sein kann, ist.

Verbindungen der allgemeinen Formeln (8) sind beispielsweise: 1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1-Acetylamino-8-hydroxynaphthalin-3,6-disulfon säure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 2-Acetylamino-5-hydroxy-naphthalin-7-sulfonsäure, 3-Acetylamino-5-hydroxy-naphthalin-7-sulfonsäure, 2-Methyl-amino-8-hydroxy-naphthalin-6-sulfonsäure oder 2-(3′- und 4′-Sulfophenyl)-amino-8-hydroxynaphthalin-6-sulfonsäure, 3-(3′- und 4′-Sulfophenyl)-amino-8-hydroxy-naphthalin-6-sulfonsäure, N,N-Di-(ß-sulfoethyl)-anilin und dessen im Benzolkern durch Methyl, Methoxy und/oder Ethoxy mono- oder disubstituierten Derivate, N-Ethyl-N-(ß-sulfoethyl)-anilin, N-(ß-Sulfoethyl)-anilin, N-(ß-Carboxyethyl)-anilin und deren im Benzolkern durch Methyl, Methoxy und/oder Ethoxy mono- oder disubstituierten Derivate, sowie 1-[4′-(ß-Sulfatoethylsulfonyl)-2′-sulfo]-phenyl-3-methyl-pyrazol-5-on, 1-[4′-(ß-Sulfatoethylsulfonyl)]-phenyl-3-carboxy-pyrazol-5-on und 1-(4′-Sulfophenyl)-3-carboxy-pyrazol-5-on.

Von besonderer Bedeutung sind sulfogruppenhaltige, gegebenenfalls Azogruppen, wie 1 oder 2 Azogruppen, tragende Kupplungskomponenten, die in o- oder p-Stellung zu einer Hydroxy- und/oder Aminogruppe kuppeln, wie beispielsweise 2-Acetylamino-5-hydroxy-naphthalin-7-sulfonsäure, 2-Acetyl-amino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Als Kupplungskomponenten H-K sind weiterhin besonders zu nennen: 1-Amino-8-hydroxynaphthalin-3,6- und 4,6-disulfonsäure sowie deren durch saure Kupplung erhaltene Arylazokupplungsprodukte der Formel (9a)

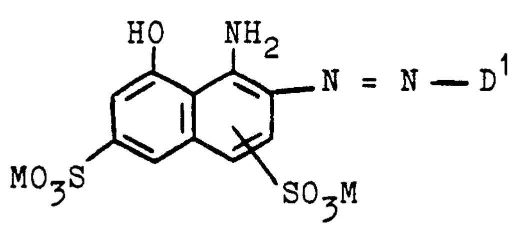

(9a)

in welcher

$D^1$ der Rest einer Diazokomponente, beispeilsweise ein Rest der Formel (10a) oder (10b)

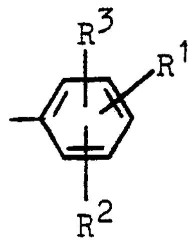

(10a)

oder

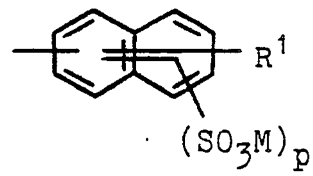

(10b)

sein kann, worin $R^1$, $R^2$, $R^3$, M und p die oben angegebenen Bedeutungen haben.

Einzelne Reste $D^1$ sind beispielsweise: Phenyl, 2-Sulfo-phenyl, 3-Sulfo-phenyl, 4-Sulfo-phenyl, 2,4-Disulfo-phenyl, 2,5-Disulfo-phenyl, 3,5-Disulfo-phenyl, 1,5-Disulfo-naphth-2-yl, 4,8-Disulfo-naphth-2-yl, 3,6,8-Trisulfo-naphth-2-yl, 4,6,8-Trisulfo-naphth-2-yl, 3,6,8-Trisulfo-naphth-1-yl, 4,6,8-Trisulfo-naphth-1-yl, 4-Sulfo-naphth-1-yl,1-Sulfo-naphth-2-yl, 3-Acetylamino-phenyl, 4-Acetylamino-phenyl, 4-Acetylamino-2-sulfo-phenyl, 5-Acetylamino-2-sulfo-phenyl, 4-Nitro-phenyl, 4-Nitro-2-sulfo-phenyl, 6-Acetylamino-4,8-disulfo-naphth-2-yl, 4-(ß-Sulfatoethylsulfonyl)-phenyl und 3-(ß-Sulfatoethylsulfonyl)-phenyl.

Weitere Kupplungskomponenten H-K ohne die faserreaktive Gruppe der Formel (3) sind bspw. solche der allgemeinen Formeln (11a), (11b), (11c) und (11d)

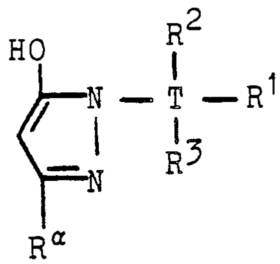

(11a)

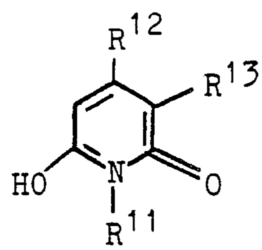

(11b)

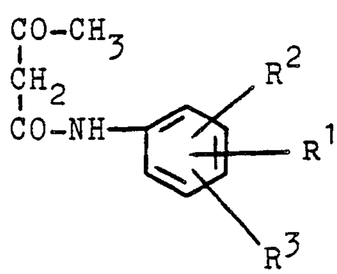

(11c)

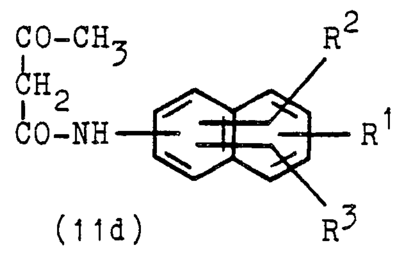

(11d)

in welchen

$R^1$, $R^2$ und $R^3$ die obengenannten Bedeutungen haben,

T für einen Benzol- oder Naphthalinring steht,

$R^\alpha$ Methyl, Carboxy, Methoxycarbonyl oder Ethoxycarbonyl oder Phenyl ist,

$R^{11}$ Wasserstoff, Alkyl von 1 bis 4 C-Atomen, das durch Phenyl oder Sulfophenyl oder durch Hydroxy, Amino, Methoxy, Ethoxy, Carboxy, Sulfo, Acetylamino, Benzoylamino oder Cyano substituiert sein kann, Cyclohexyl, Phenyl oder durch Carboxy, Sulfo, Benzoylamino, Acetylamino, Methyl, Methoxy, Cyano oder Chlor substituiertes Phenyl ist,

$R^{12}$ Alkyl von 1 bis 4 C-Atomen oder Phenyl ist und

$R^{13}$ Wasserstoff, Chlor, Brom, Sulfo, Carbamoyl, Methylsulfonyl, Phenylsulfonyl, Cyano oder Sulfomethylen bedeutet.

Pyrazolon-Kupplungskomponenten sind beispielsweise 3-Methyl-, 3-Carboxy- und 3-($C_2$-$C_5$-Alkoxycarbonyl)-5-pyrazolone, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Sulfo, Benzoyl, Acetyl, Acetylamino, Nitro, Hydroxy, Carboxy, Carbamoyl und/oder oder Sulfamoyl substituiertes Phenyl oder sulfosubstituiertes 1- oder 2-Naphthyl tragen, beispielsweise:

1-(2′-Methoxy-5′-methylphenyl)-, 1-(2′-Chlor-5′-sulfophenyl)-, 1-(2′-Methoxy-5′-sulfophenyl)-, 1-(2′-Methyl-4′-sulfophenyl)-, 1-(2′,5′-Dichlor-4′-sulfophenyl)-, 1-(2′,5′-Disulfophenyl)-, 1-(2′-Carboxyphenyl)-, 1-(3′-Sulfophenyl)-, 1-(4′-Sulfophenyl)-, 1-(3′-Sulfamoylphenyl)-3-carboxy-5-pyrazolon, 1-(3′- oder 4′-Sulfophenyl)-, 1-(2′-Chlor-4′- oder -5′-sulfophenyl)-, 1-(2′-Methyl-4′-sulfophenyl)-, 1-(4′,8′-Disulfo-2′-naphthyl)- und 1-(6′-Sulfo-1′-naphthyl)-3-methyl-5-pyrazolon, 1-Phenyl-5-pyrazolon-3-carbonsäureethylester, 5-Pyrazolon-3-carbonsäureethylester oder 5-Pyrazolon-3-carbonsäure.

Pyridonkupplungskomponenten sind beispielsweise: 1-Ethyl-2-hydroxy-4-methyl-5-carbonamido-pyridon-6, 1-(2′-Hydroxyethyl)-2-hydroxy-4-methyl-5-carbonamido-pyridon-6, 1-(4′-Sulfo-phenyl)-2-hydroxy-4-methyl-5-carbonamido-pyridon-6, 1-(2′-Sulfoethyl)-2-hydroxy-4-methyl-5-cyano-pyridon-6, 1-Ethyl-2-hydroxy-4-sulfomethyl-5-carbonamido-pyridon-6, 1-Ethyl-2-hydroxy-4-methyl-5-sulfomethyl-pyridon-6, 1-Methyl-2-hydroxy-4-methyl-5-cyano-pyridon-6, 1-Methyl-2-hydroxy-5-acetyl-pyridon-6, 1,4-Dimethyl-2-hydroxy-5-cyanpyridon-6, 1,4-Dimethyl-2-hydroxy-5-carbonamido-pyridon-6, 2,6-Dihydroxy-4-ethyl-5-cyano-pyridin, 2,6-Dihydroxy-4-ethyl-5-carbonamido-pyridin, 1-Ethyl-2-hydroxy-4-methyl-5-sulfomethyl-pyridon-6, 1-Methyl-2-hydroxy-4-methyl-5-methylsulfonyl-pyridon-6, 1-Carboxymethyl-2-hydroxy-4-ethyl-5-phenylsulfonyl-pyridon-6 und 1-(2′-Sulfo-ethyl)-2-hydroxy-4-carboxy-pyridon-6.

Faserreaktivgruppenhaltige Kupplungskomponenten der Anilin-und Naphthalinreihe mit dem Rest der Formel (3) leiten sich beispielsweise von Verbindungen der allgemeinen Formeln (11e) bis (11g)

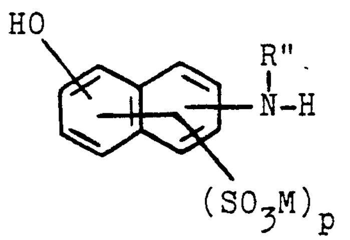

(11e)

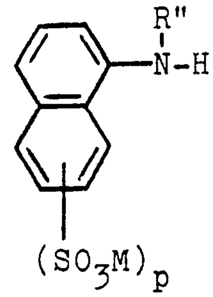

(11f)

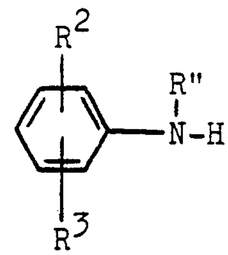

(11g)

in welchen R″, $R^2$, $R^3$, M und p die obengenannten Bedeutungen haben.

Durch Umsetzung mit einem faserreaktiven Acylierungsmittel vor der Kupplung mit dem Diazoniumsalz, die Verbindungen der allgemeinen Formel (11e) betreffend, oder nach der Kupplung mit dem Diazoniumsalz, die Verbindungen der allgemeinen Formeln (11e) bis (11g) betreffend, kann ein faserreaktiver Rest eingeführt werden. Prinzipiell kommen hierfür alle bekannten faserreaktiven Acylierungsmittel in Betracht, wie hier insbesondere eine Difluortriazinylamino-Verbindung der später angegebenen und definierten allgemeinen Formel (20).

Weitere Kupplungskomponenten H-K sind die durch saure Kupplung erhältlichen Arylazo-Kupplungsprodukte der 1-Amino-8-hydroxy-naphthalin-3,6- und -4,6-disulfonsäure der allgemeinen Formel (9b)

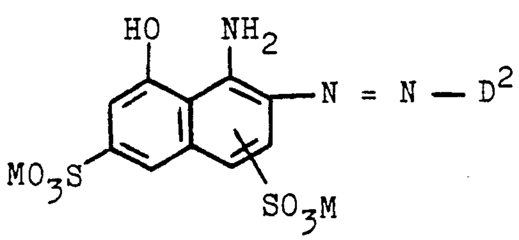

(9b)

in welcher $D^2$ der Rest einer Diazokomponente mit einer faserreaktiven Gruppe, insbesondere der Formel (3), ist. Der Formelrest $D^2$ ist beispielsweise ein Rest der obengenannten Formel (10a) mit $R^1$ gleich einer Gruppe der Formel $-SO_2-Y$ oder ein Rest der Formel (12)

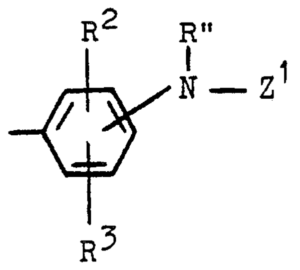

(12)

in welcher R″, $R^2$, $R^3$ und M die oben angegebenen Bedeutungen haben und
$Z^1$ ein Rest der allgemeinen Formel (3a)

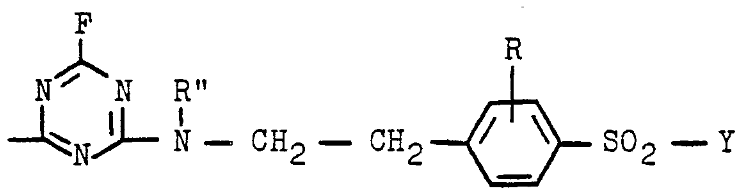

(3a)

mit R″, R und Y der oben angegebenen Bedeutung ist.

Aromatische Diamine aus dem Rest der Formel (12) sind beispielsweise: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, wobei in allen diesen Diaminoverbindungen die eine primäre oder sekundäre Aminogruppe durch den faserreaktiven Rest $Z^1$ substituiert ist.

Bevorzugte Reste $D^2$ der Formel (12) sind beispielsweise die Reste der Formeln (12a), (12b), (12c) und (12d) mit M der oben angegebenen Bedeutung:

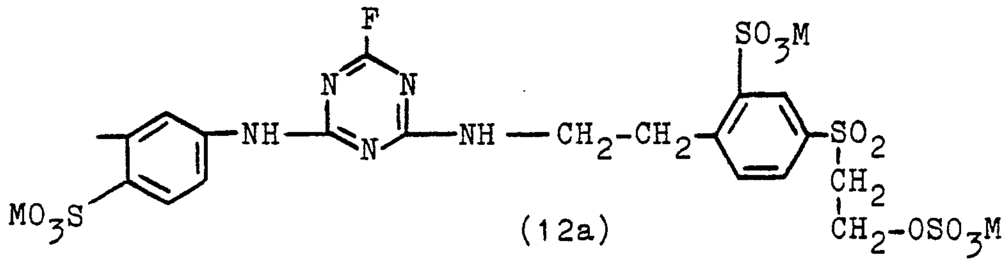

(12a)

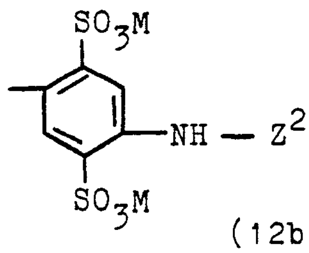

(12b)

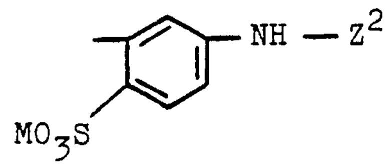

(12c)

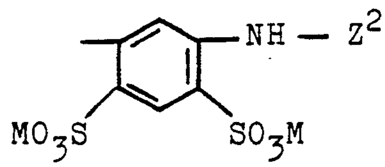

(12d)

in welchen $Z^2$ ein Rest der Formel (3b)

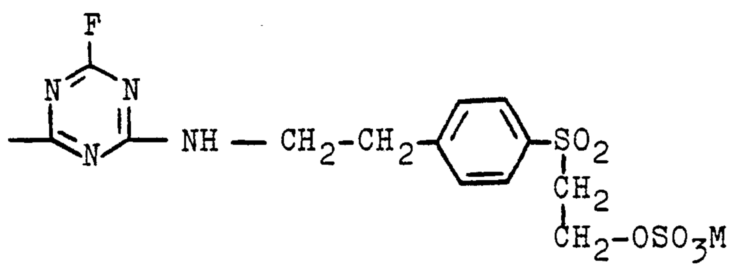

(3b)

mit M der obigen Bedeutung ist.

Faserreaktive Diazokomponentenreste $D^2$ sind auch solche, die eine andere faserreaktive Gruppe als die Gruppe Z enthalten. Solche Reste $D^2$ sind beispielsweise 4-(2-m-Sulfophenylamino-4-fluor-s-triazin-6-yl)-amino-2-sulfo-phenyl, 4-ß-Sulfatoethylsulfonyl-phenyl, 3-ß-Sulfatoethylsulfonylphenyl und 4-Vinylsulfonyl-phenyl.

Kupplungskomponenten, die erfindungsgemäß die faserreaktive Gruppe der Formel (3a) enthalten, sind beispielsweise Verbindungen der allgemeinen Formel (13a), (13b) und (13c) bzw. deren $Z^1$-freien Vorprodukte:

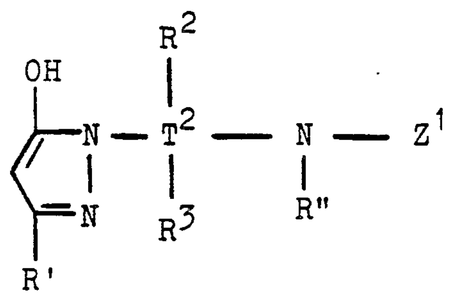

(13a)

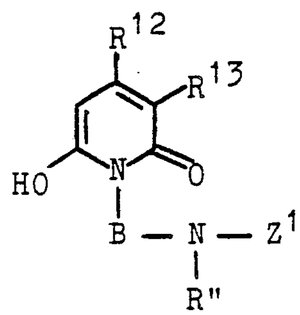

(13b)

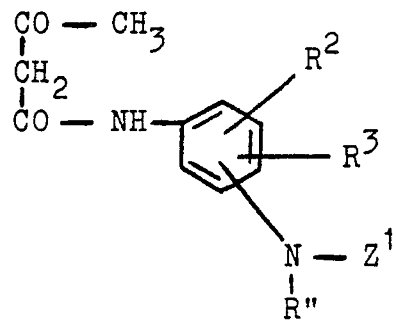

(13c)

in welchen
R″, $R^2$, $R^3$, $R^{12}$, $R^{13}$ und $Z^1$ die oben angegebenen Bedeutungen haben und
$T^2$ einen Benzol- oder Naphthalinring bedeutet,
R′ eine Methyl- oder Carboxygruppe ist und
B Alkyl von 1 bis 4 C-Atomen, Benzyl oder Phenethyl oder Phenyl oder im Benzolrest durch Fluor, Chlor, Brom, Methyl, Methoxy, Cyano, Sulfo, Carboxy, Acetyl, Nitro, Carbamoyl und/oder Sulfamoyl substituiertes Benzyl, Phenethyl oder Phenyl ist.

Kupplungskomponenten, die den Verbindungen der allgemeinen Formeln (13a) bis (13c) entsprechen und die anstelle des Restes $Z^1$ ein Wasserstoffatom besitzen, in deren freie Aminogruppe jedoch nach beendeter Kupplung der Rest $Z^1$ eingeführt werden kann, sind beispielsweise: 1-(3′- oder 4′-Aminophenyl)-, 1-(2′-Sulfo-5′-aminophenyl)-und 1-(2′-Methoxy-5′-aminophenyl)-3-carboxy-5-pyrazolon, 1-(3′- oder 4′-Aminophenyl)- und 1-(3′- oder 4′-Nitrophenyl)-3-methyl-5-pyrazolon, 1-(3′- oder 4′-Nitrophenyl)-, 1-(6′-Nitro-4′,8′-disulfonaphthyl-2′)- und 1-(6′-Amino-4′,8′-disulfonaphthyl-2′)-3-carboxy-5-pyrazolon.

Bevorzugte faserreaktive Kupplungskomponenten entsprechend den Formeln (13a) und (13b) sind beispielsweise Verbindungen der Formeln (14a) bis (14f):

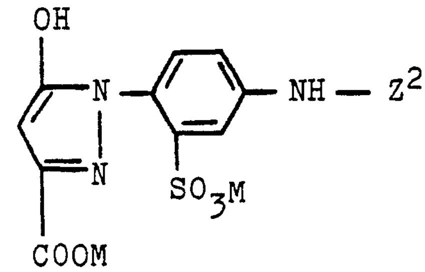

(14a)

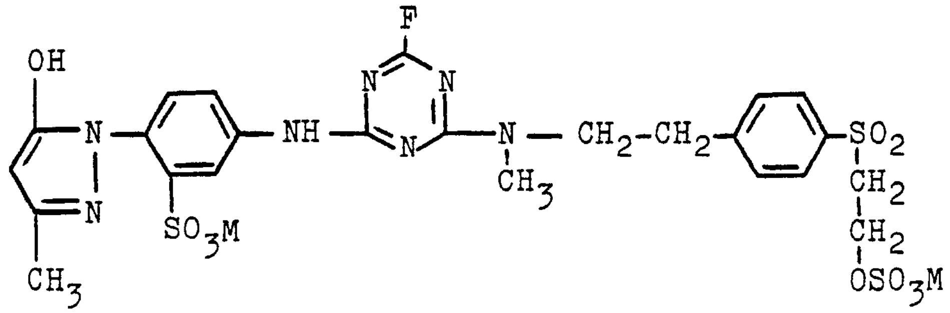

(14b)

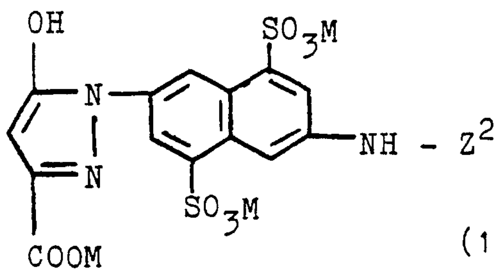

(14c)

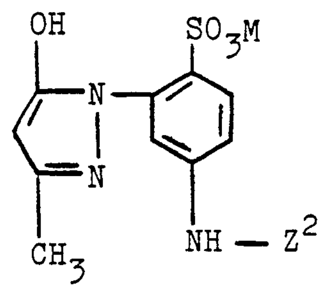

(14d)

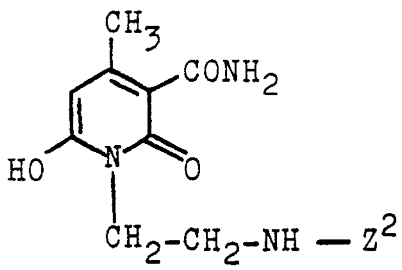

(14e)

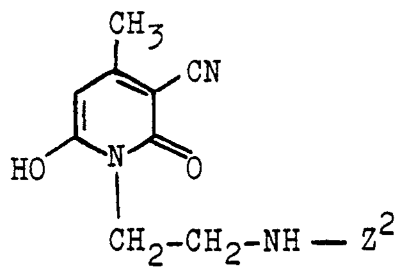

(14f)

in welchen M und $Z^2$ die obengenannten Bedeutungen haben.

Von den erfindungsgemäßen Azofarbstoffen der allgemeinen Formel (1) können insbesondere die Mono- und Disazoverbindungen der allgemeinen Formeln (15), (16a), (16b), (16c), (16d), (16e), (16f) und (17) hervorgehoben werden:

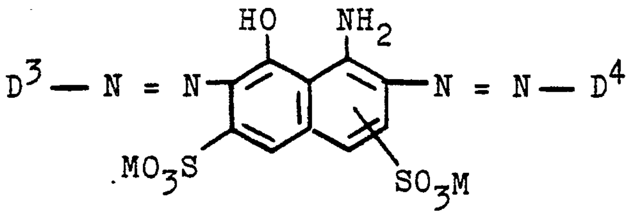

(15)

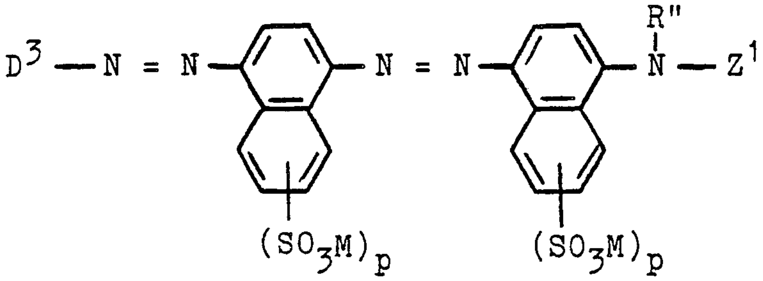

(16a)

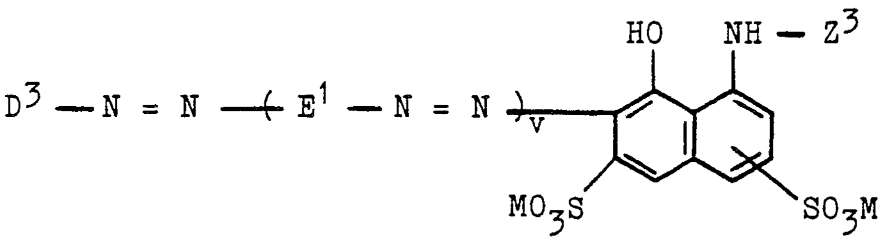

(16b)

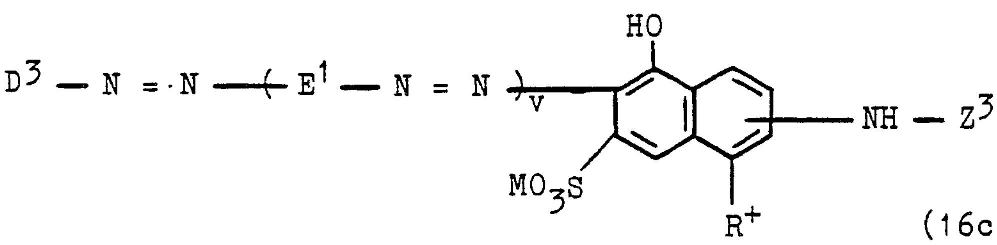

(16c)

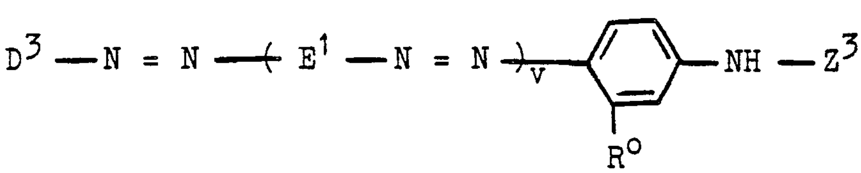

(16d)

$$D^2 - N = N - K^2 \qquad (16e)$$

$$D^1 - N = N - K^3 \qquad (16f)$$

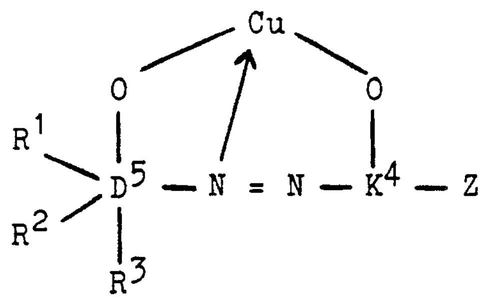

(17)

In diesen Formeln bedeuten:

In Formel (15) haben $D^3$ und $D^4$ zueinander gleiche oder voneinander verschiedene Bedeutungen und jedes ist ein Rest einer Diazokomponente, von denen mindestens eine eine faserreaktive Gruppe der allgemeinen Formel (3), in welcher $R''$ beide für ein Wasserstoffatom stehen und R ebenfalls ein Wasserstoffatom ist, bevorzugt eine faserreaktive Gruppe $Z^3$ der nachstehend definierten Formel (3c) gebunden enthält, $Z^1$ besitzt die obengenannte Bedeutung oder ist bevorzugt eine Gruppe $Z^3$, und M hat die obengenannte Bedeutung; bevorzugt sind $D^3$ und $D^4$, zueinander gleich oder voneinander verschieden, jedes ein Rest $D^1$ oder $D^2$ entsprechend den obengenannten und definierten allgemeinen Formeln (10a) und (10b) bzw. (12), insbesondere bevorzugt ein Mono- oder Disulfophenyl- oder Mono-, Di- oder Trisulfonaphthyl-Rest bzw. ein Rest der Formel (12A)

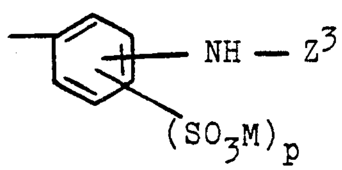

(12A)

mit p und M der obengenannten Bedeutung und $Z^3$ der nachstehend genannten Bedeutung; in Formel (16a) haben $D^3$, p, $R''$ und $Z^1$ die obengenannten Bedeutungen, wobei $R''$ bevorzugt ein Wasserstoffatom ist und $D^3$ bevorzugt ein Rest $D^1$ der Formel (10a) oder (10b) ist, insbesondere bevorzugt ein Monosulfo- oder Disulfophenyl- oder ein Monosulfo-, Disulfo- oder Trisulfonaphthylrest ist;

in den Formeln (16b), (16c) und (16d) haben $D^3$, M und v die obengenannten Bedeutungen, wobei $D^3$ bevorzugt ein Rest $D^1$ der Formel (10a) oder (10b) ist, insbesondere bevorzugt ein Monosulfo- oder Disulfophenyl- oder ein Monosulfo-, Disulfo- oder Trisulfonaphthylrest ist,

$E^1$ ist ein Rest der Formel (7A)

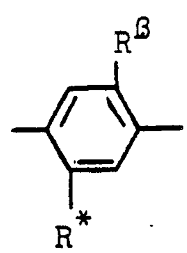

(7A)

in welcher $R^ß$ und $R^*$, zueinander gleich oder voneinander verschieden, jedes ein Wasserstoffatom, die Methyl-, Methoxy- oder Ethoxygruppe bedeutet,

$Z^3$ ist ein Rest der allgemeinen Formel (3c)

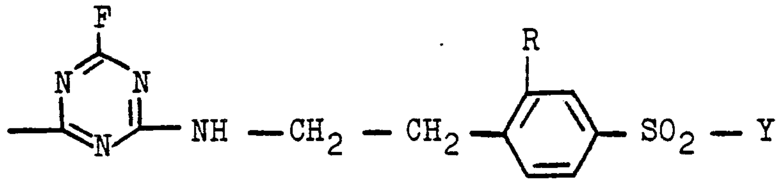

(3c)

mit Y der obengenannten Bedeutung und R gleich Sulfo oder bevorzugt Wasserstoff,
$R^o$ ist die Acetylamino- oder Ureidogruppe und
$R^*$ ist ein Wasserstoffatom oder eine Sulfogruppe; in Formel (16e) ist $D^2$ ein Rest der obenangegebenen und definierten allgemeinen Formel (12), wobei im Rest $Z^1$ der Rest $R''$ bevorzugt ein Wasserstoffatom ist und $Z^1$ insbesondere bevorzugt ein Rest der allgemeinen Formel (3c) ist, und $K^2$ einen Rest der obengenannten und definierten allgemeinen Formel (8a), (8b), (8d) oder (8e) ist;
in Formel (16f) bedeutet $D^1$ einen Rest der allgemeinen Formel (10a) oder (10b) und $K^3$ einen Rest der allgemeinen Formel (14a) bis (14f);
in Formel (17) bedeutet $D^5$ einen Benzol- oder Naphthalinkern, $R^1$, $R^2$ und $R^3$ haben die obengenannten, insbesondere bevorzugten Bedeutungen, wobei im Falle, daß $D^5$ für einen Naphthalinkern steht, $R^2$ ein Wasserstoffatom und $R^3$ ein Wasserstoffatom oder eine Sulfogruppe bedeutet, die Oxygruppen an $D^5$ und $K^4$ stehen in ortho-Stellung zur Azogruppe, $K^4$ ist ein Naphthalinkern, der durch 1 oder 2 Sulfogruppen substituiert sein kann, bevorzugt substituiert ist, und Z die obengenannte faserreaktive Gruppe der allgemeinen Formel (3a) ist oder bevorzugt eine Gruppe der Formel $-NH-Z^3$ mit $Z^3$ der Bedeutung der allgemeinen Formel (3c) ist.

Von den Farbstoffen der allgemeinen Formel (15) können die in den Beispielen 10, 12, 15 und 20 beschriebenen Farbstoffe hervorgehoben werden.

Von den Farbstoffen der allgemeinen Formel (16a) können diejenigen der Beispiele 112 und 115 hervorgehoben werden, von den Farbstoffen der allgemeinen Formel (16b) diejenigen der Beispiele 71, 80, 81, 84 und 95, von den Farbstoffen der Formel (16c) diejenigen der Beispiele 93, 104, 105, 106 und 111, von den Farbstoffen der allgemeinen Formel (16d) diejenigen der Beispiele 56, 62 und 63, von den Farbstoffen der allgemeinen Formel (16e) diejenigen der Beispiele 22, 23, 24 und 40 und von den Farbstoffen der Formel (16f) der des Beispieles 37. Ebenso sind die Farbstoffe der Beispiele 121 und 125 als von besonderem technischen Interesse erwähnenswert.

Die erfindungsgemäßen Farbstoffe lassen sich in üblicher Weise der Synthese von Farbstoffen herstellen, beispielsweise durch Umsetzung von für die entsprechende Farbstoffklasse dem Fachmann geläufigen Farbstoffvorprodukten mit den für diese Farbstoffklasse üblichen Synthesemethoden, wobei mindestens eine dieser Farbstoffvorprodukte eine faserreaktive Gruppe der allgemeinen Formel (3) enthält. So können beispielsweise Mono- und Disazofarbstoffe entsprechend der allgemeinen Formel (1) durch Umsetzung von deren Diazo- und Kupplungskomponenten in der hierfür üblichen Verfahrensweise der Diazotierung und Kupplung synthetisiert werden, wobei die Diazo- oder Kupplungskomponente oder beide (jeweils) eine faserreaktive Gruppe der allgemeinen Formel (3) enthalten. Im Falle der Synthese von Disazofarbstoffen kann bereits die Diazo- oder Kupplungskomponente die zweite Azogruppierung gebunden enthalten. Erfindungsgemäß einsetzbare Diazokomponenten sind die für faserreaktive Azofarbstoffe üblichen aromatischen carbocyclischen und heterocyclischen Aminoverbindungen, die gegebenenfalls die faserreaktive Gruppe der allgemeinen Formel (3) enthalten, und die zur Synthese von faserreaktiven Azofarbstoffen üblichen Kupplungskomponenten, beispielsweise der Naphthol-, Anilin-, Naphthylamin-, Aminonaphthol-, Pyrazolon- und Pyridonreihe, wobei gegebenenfalls die Kupplungskomponente die faserreaktive Gruppe der allgemeinen Formel (3) enthält. Solche Diazo- und Kupplungskomponenten sind beispielsweise die anfangs beschriebenen Verbindungen entsprechend den allgemeinen Formeln (5), (6), (7), (8), (9), (10), (11) und (13) sowie (14).

Die Diazotierungs- und Kupplungsreaktionen erfolgen in üblicher Weise, so die Diazotierung in der Regel bei einer Temperatur zwischen -5° C und +15° C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle der aminogruppenhaltigen Kupplungskomponente und bei einem pH-Wert zwischen 3 und 7,5 im Falle der hydroxygruppenhaltigen Kupplungskomponente und bei einer Temperatur zwischen 0 und 25° C, ebenso bevorzugt in wäßrigem Medium.

Die neuen Farbstoffe der allgemeinen Formel (1) können ebenfalls erfindungsgemäß in der Weise hergestellt werden, daß man Cyanurfluorid mit einer Aminoverbindung der allgemeinen Formel (18)

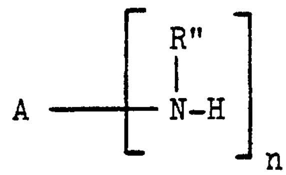

(18)

in welcher A, R″ und n die obengenannten Bedeutungen haben, und einer Aminoverbindung der allgemeinen Formel (19)

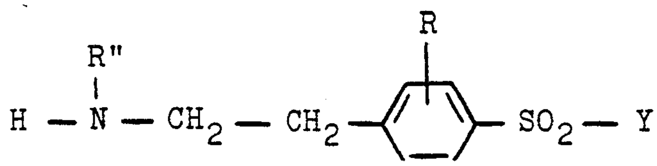

(19)

in welcher R″, R und Y die obengenannten Bedeutungen haben, in beliebiger Folge umsetzt. So kann man zunächst eine Aminoverbindung der allgemeinen Formel (18) mit Cyanurfluorid zur Difluortriazinylaminoverbindung der allgemeinen Formel (18a)

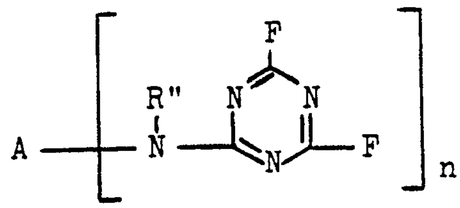

(18a)

mit A, R″ und n der obengenannten Bedeutung umsetzen, und diese wird durch Reaktion mit einer Aminoverbindung der allgemeinen Formel (19) in äquivalenter Menge in den Endfarbstoff (1) übergeführt, oder man reagiert zunächst eine Aminoverbindung der allgemeinen Formel (19) mit Cyanurfluorid zur Difluortriazinylaminoverbindung der allgemeinen Formel (20)

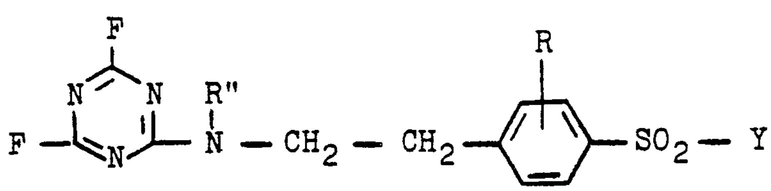

(20)

mit R″, R und Y der obengenannten Bedeutung und setzt diese in äquivalenter Menge mit der Verbindung der allgemeinen Formel (18) zum Endfarbstoff (1) um. Die Kondensationsreaktionen zwischen Cyanurfluorid bzw. den Difluortriazinylaminoverbindungen (18a) und (20) mit den Aminoverbindungen (18) und/oder (19) können in der üblichen Weise der Umsetzung von Cyanurfluorid bzw. Difluortriazinylaminoverbindungen mit Aminoverbindungen erfolgen, so in organischem oder bevorzugt wäßrig-organischem Medium, insbesondere bevorzugt in wäßrigem Medium unter Zusatz säurebindender Mittel, wie Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise Natrium, Kalium oder Calcium sind. Säurebindende Mittel sind ebenso tertiäre Amine, wie beispielsweise Pyridin, Triethylamin oder Chinolin. Sofern diese Kondensationsreaktionen in organischem oder wäßrig-organischem Medium erfolgen, ist das (anteilige) organische Lösemittel Aceton, Dioxan und Dimethylformamid.

Die Kondensationsreaktionen zwischen Cyanurfluorid und den Aminoverbindungen erfolgen in der Regel bei einer Temperatur zwischen -10° C und +10° C, vorzugsweise zwischen -5° C und +5° C, sowie bei einem pH-Wert zwischen 1,0 und 7,0, bevorzugt zwischen 4 und 5. Die Umsetzung der Difluortriazinylaminoverbindungen der allgemeinen Formel (18a) oder (20) mit einer Aminoverbindung der allgemeinen Formel (18) bzw. (19) erfolgt beispielsweise bei einer Temperatur zwischen 0 und 50° C, bevorzugt zwischen 10 und 30° C, und bei einem pH-Wert zwischen 2 und 8, bevorzugt zwischen 5 und 7, wobei darauf zu achten ist, daß die faserreaktive Gruppierung im schwach alkalischen Bereich nicht geschädigt wird.

Bei der erfindungsgemäßen Synthese von Schwermetallkomplex-Azofarbstoffen, beispielsweise solchen entsprechend der allgemeinen Formeln (4c) und (17), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält und die zudem einen Acylaminorest gebunden enthalten, wie einen Acetylaminorest entsprechend der allgemeinen Formel -N(R″)-Acyl , in welcher Acyl für den Acylrest einer organischen Säure, wie einer niederen Alkancarbonsäure, steht und R″ die obengenannte Bedeutung besitzt, so beispielsweise von einer Ausgangsverbindung entsprechend der allgemeinen Formel (21)

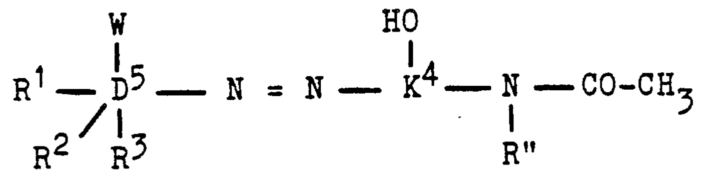 (21)

aus, in welcher $R^1$, $R^2$, $R^3$, $D^5$, $K^4$ und R″ die obengenannten Bedeutungen haben und W ein Wasserstoffatom oder eine in ortho-Stellung zur Azogruppe an $D^5$ gebundene Hydroxy- oder Methoxygruppe ist, und setzt diese acylaminogruppenhaltige Ausgangs-Azoverbindung analog bekannten und üblichen Verfahrensweisen mit einem Schwermetall-abgebenden Mittel, wie einem Schwermetallsalz, um oder unterwirft sie im Falle der Bildung eines Kupferkomplex-Azofarbstoffes auch einer auf üblichem Wege durchzuführenden oxidativen oder entalkylierenden Kupferungsreaktion. Die nun erhaltenen Schwermetallkomplex-Azoverbindungen mit der Acylaminogruppe können sodann analog bekannten Verfahrensweisen unter Verseifung (Hydrolyse) der Acylaminogruppe zur Aminogruppe mit Cyanurfluorid und der faserreaktiven Aminoverbindung entsprechend der allgemeinen Formel (19) zu den erfindungsgemäßen Farbstoffen der allgemeinen Formel (1) umgesetzt werden.

Die Ausgangsverbindung der allgemeinen Formel (19) kann beispielsweise durch Sulfochlorierung von N-Acetyl-ß-phenylethylamin erhalten werden. Zur Überführung der Sulfochloridgruppe in die faserreaktive Gruppe der Vinylsulfonreihe wird in üblicher Weise sodann diese zur Sulfinsäure reduziert, welche wiederum beispielsweise mit Ethylenoxid oder einem ß-Halogeno-ethanol zur ß-Hydroxyethylsulfonyl-Verbindung umgesetzt wird, die sodann entacetyliert und gegebenenfalls verestert wird, so in die entsprechende ß-Sulfatoethylsulfonyl-Gruppe mittels den üblichen Sulfatierungsmitteln übergeführt wird. Solche Methoden sind an sich bekannt und können analog angewendet werden.

Die erfindungsgemäßen Verbindungen der allgemeinen Formel (1) eignen sich als faserreaktive Farbstoffe zum Färben und Bedrucken von hydroxygruppenhaltigen Fasern, insbesondere von Baumwolle, ebenso auch für synthetische oder natürliche Polyamidfasern wie Wolle. Als Färbeverfahren eignen sich die bekannten Färbe- und Druckverfahren für faserreaktive Farbstoffe, insbesondere solche für faserreaktive Farbstoffe, die eine Kombination aus den faserreaktiven Gruppen der Fluortriazin- und Vinylsulfonreihe besitzen. Insbesondere sind die erfindungsgemäßen Farbstoffe bei 20 bis 40 °C und im Klotz-Kaltverweilverfahren mit Vorteil anwendbar. Die Applikation ist in einem weiten Temperaturbereich möglich, und die Farbstoffe zeichnen sich durch eine hohe Farbtiefe und einen hohen Fixiergrad aus.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalisalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel 1**

Zu 17,3 Teilen einer salzsauer diazotierten Anilin-4-sulfonsäure gibt man bei 5 °C 31,6 Teile einer Suspension von 1-Amino-8-naphthol-3,6-disulfonsäure in 300 Teilen Wasser. Man kuppelt während 8 Stunden bei einem pH-Wert zwischen 1 und 2 und fügt anschließend 59,2 Teile einer Suspension eines salzsauer diazotierten sekundären Kondensationsproduktes aus 1,3-Phenylendiamin-4-sulfonsäure, Cyanurfluorid und 4-(ß-Sulfatoethylsulfonyl)-1-(ß-aminoethyl)-benzol hinzu. Mit 17,8 Teilen Natriumcarbonat wird sodann schwach sauer ausgekuppelt. Der Farbstoff wird aus neutraler Lösung durch Zugabe von Kaliumchlorid ausgefällt und anschließend getrocknet. Es wird ein schwarzes, elektrolythaltiges Pulver des Alkalimetallsalzes der Verbindung der Formel

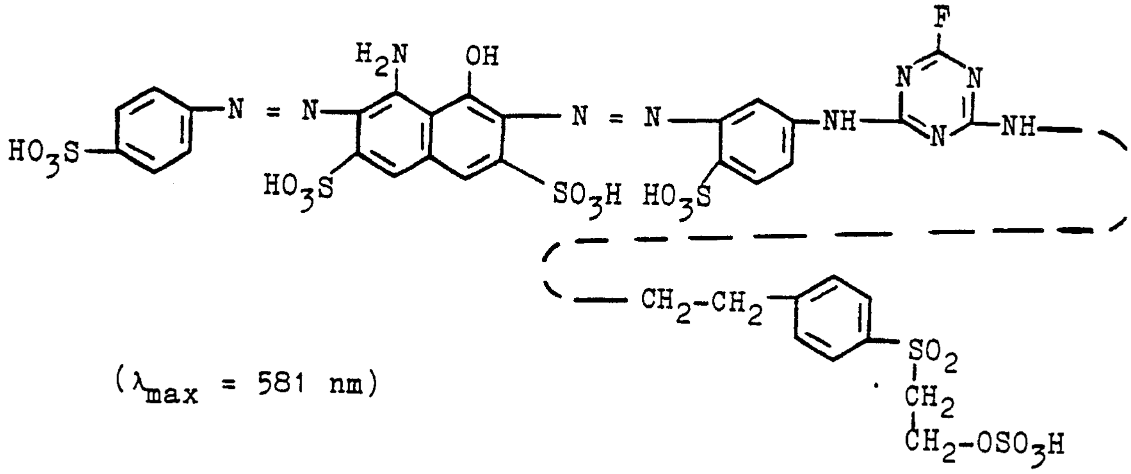

($\lambda_{max}$ = 581 nm)

erhalten, das nach den üblichen Färbeverfahren für faserreaktive Farbstoffe Baumwolle in echten marineblauen Tönen färbt. Von den Echtheiten können insbesondere die Wasch- und Schweißlichtechtheiten hervorgehoben werden.

**Beispiele 2 bis 14**

Weitere erfindungsgemäße Farbstoffe entsprechend einer allgemeinen Formel (22)

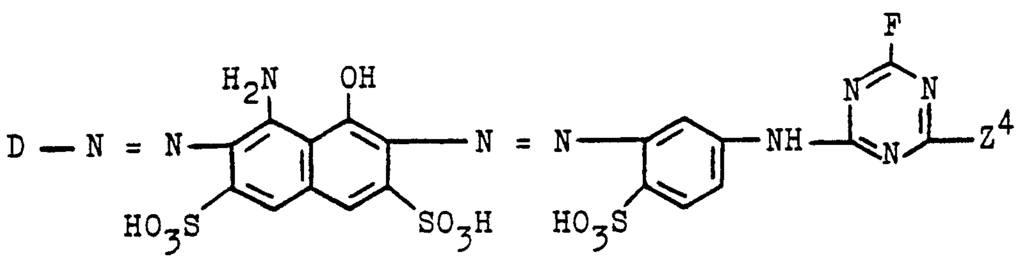

(22)

worin $Z^4$ den Rest der Aminoverbindung der Formel (19) bedeutet, sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 1 unter Anwendung der sauer angekuppelten Diazokomponente $D-NH_2$, 1-Amino-8-naphthol-3,6-disulfonsäure als bivalenter Kupplungskomponente, der 1,3-Phenylendiamin-4-sulfonsäure, Cyanurfluorid und dem Amin der allgemeinen Formel (19), herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest D — | Rest -$Z^4$ | Farbton |
|---|---|---|---|
| 2 | 2-Chlor-4-sulfo-phenyl | β-[4-(β-Sulfatoethylsulfonyl)-phenyl]-ethylamino | marineblau |
| 3 | 2-Chlor-4,6-disulfophenyl | β-[4-(β-Sulfatoethylsulfonyl)-2-sulfophenyl]-ethylamino | rotstichig marineblau |
| 4 | 4-Chlor-2-sulfo-phenyl | β-[4-(β-Sulfatoethylsulfonyl)-phenyl]-ethylamino | rotstichig marineblau |
| 5 | 1,5-Disulfo-2-naphthyl | β-[4-(β-Sulfatoethylsulfonyl)-2-sulfo-phenyl]-ethylamino | grünstichig marineblau |
| 6 | 2,5-Dimethoxy-4-sulfo-phenyl | dito | rotstichig marineblau |
| Bsp. | Rest D - | Rest -$Z^4$ | Farbton |
| 7 | 2-Methoxy-5-methyl 4-sulfo-phenyl | dito | rotstichig marineblau |
| 8 | 1,8-Disulfo-2-naphthyl | dito | rotstichig marineblau |
| 9 | 3,6,8-Disulfo-2-naphthyl | β-[4- (β-Sulfatoethylsulfonyl)-phenyl]-ethylamino | grünstichig marineblau |
| 10 | 4-(β-Sulfatoethylsulfonyl)-phenyl | dito | rotstichig marineblau |
| 11 | 4-(β-Sulfatoethylsulfonyl)-2-sulfo-phenyl | dito | rotstichig marineblau |
| 12 | 5-(β-Sulfatoethylsulfonyl)-2-sulfo-phenyl | dito | rotstichig marineblau |
| 13 | dito | β-[4- (β-Sulfatoethylsulfonyl)-2-sulfo-phenyl]-ethylamino | rotstichig marineblau |
| 14 | 4-(β-Sulfatoethylsulfonyl)-2-sulfo-phenyl | dito | rotstichig marineblau |

**Beispiel 15**

18,8 Teile 1,3-Phenylendiamin-4-sulfonsäure werden unter starkem Rühren bei 0 °C mit 14 Teilen Cyanurfluorid umgesetzt. Durch Zugabe einer wäßrigen Natriumcarbonatlösung wird der pH-Wert zwischen 4 und 5 gehalten. Anschließend werden 31 Teile 4-(ß-Sulfatoethylsulfonyl)-1-(ß-aminoethyl)-benzol bei 20 °C und einem pH-Wert zwischen 5 und 6 ankondensiert. Das erhaltene sekundäre Kondensationsprodukt wird sodann in üblicher Weise nach Zugabe von Salzsäure mit Natriumnitrit bei einer Temperatur zwischen 0 und 5 °C diazotiert. Die erhaltene Diazoniumsalzlösung wird zu einer Suspension von 30,8 Teilen 1-Amino-8-naphthol-3,6-disulfonsäure in 300 Teilen Wasser gegeben. Die Kupplungsreaktion erfolgt bei einem pH-Wert von 1,5 bis 2.

Die erhaltene Monoazoverbindung wird nunmehr mit einer salzsauren, wäßrigen Lösung der Diazoniumverbindung von 17,3 Teilen Anilin-4-sulfonsäure versetzt; die Kupplungsreaktion zum Disazofarbstoff wird bei einem pH-Wert zwischen 4,5 und 5,5 und bei einer Temperatur von 0 bis 20 °C durchgeführt. Die erfindungsgemäße Verbindung wird durch Kaliumchlorid ausgefällt. Nach Trocknen erhält man ein schwarzes elektrolythaltiges Pulver mit dem Alkalimetallsalz der Verbindung der Formel

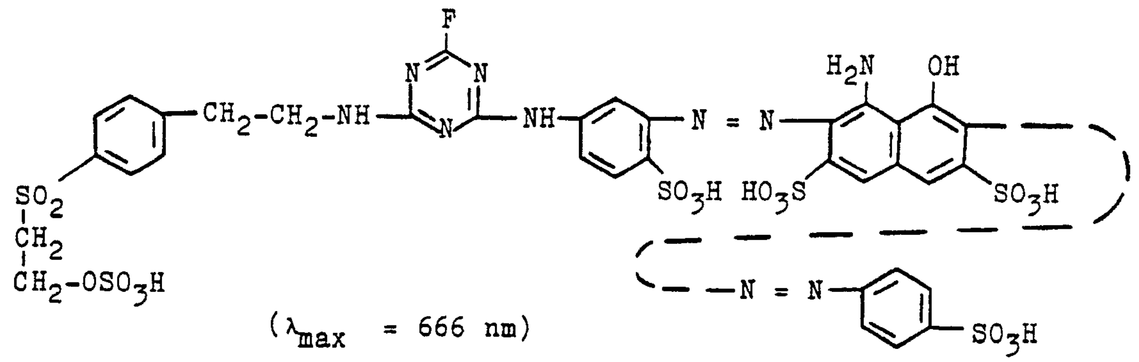

($\lambda_{max}$ = 666 nm)

die nach den in der Anwendungstechnik für faserreaktive Farbstoffe üblichen Färbe- und Druckverfahren auf Baumwolle rotstichig marineblaue Färbungen mit guter Echtheit liefert. Von den Echtheiten sind die Licht- und Waschechtheiten hervorzuheben.

**Beispiele 16 bis 21**

Weitere erfindungsgemäße Farbstoffe entsprechend einer allgemeinen Formel (23)

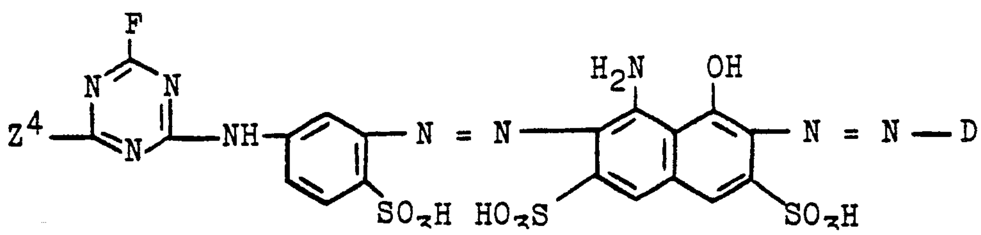

(23

sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 15 unter Anwendung der neutral gekuppelten Diazokomponente D-$NH_2$ , 1-Amino-8-naphthol-3,6-disulfonsäure als bivalenter Kupplungskomponente und dem Kondensationsprodukt aus 1,3-Phenylendiamin-4-sulfonsäure, Cyanurfluorid und dem Amin der allgemeinen Formel (19) als sauer angekuppelter Diazokomponente, herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest D - | Rest -$Z^4$ | Farbton |
|---|---|---|---|
| 16 | 1,5-Disulfo-2-naphthyl | β-[4-(β-Sulfatoethylsulfonyl)-phenyl]-ethylamino | rotstichig marineblau |
| 17 | 2-Chlor-4,6-disulfophenyl | β-[4-(β-Sulfatoethylsulfonyl)-phenyl]-ethylamino | rotstichig marineblau |
| 18 | 2-Chlor-4-sulfophenyl | β-[4-(β-Sulfatoethylsulfonyl)-1-phenyl]-ethylamino | rotstichig marineblau |
| 19 | 2-Methoxy-5-methyl-4-sulfophenyl | β-[4-(β-Sulfatoethylsulfonyl)-phenyl]-ethylamino | rotstichig marineblau |
| 20 | 4-(β-Sulfatoethylsulfonyl)-phenyl | dito | rotstichig marineblau |
| 21 | 3,6,8-Trisulfo-2-naphthyl | β-[4-(β-Sulfatoethylsulfonyl)-phenyl]-ethylamino | rotstichig marineblau |

**Beispiel 22**

Das Kondensationsprodukt aus 18,8 Teilen 1,3-Phenylendiamin-4-sulfonsäure, 18,5 Teilen Cyanurfluorid und 36,7 Teilen 4-(ß-Sulfatoethylsulfonyl)-1-(ß-aminoethyl)-benzol wird salzsauer diazotiert, mit 28,5 Teilen 1-(4′-Sulfophenyl)-3-carboxypyrazol-5-on versetzt und bei einem pH-Wert zwischen 5 und 7 gekuppelt. Die erfindungsgemäße Verbindung wird mit Kaliumchlorid aus neutraler Lösung ausgefällt und getrocknet. Das erhaltene Alkalisalz der Verbindung der Formel

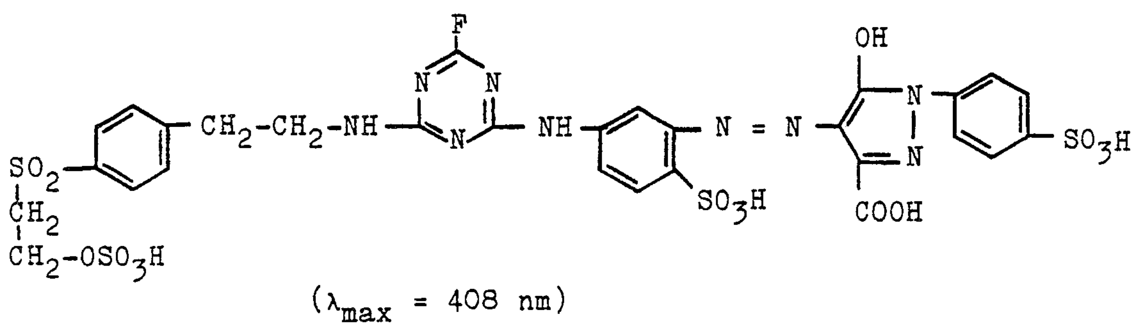

($\lambda_{max}$ = 408 nm)

färbt nach den für faserreaktive Farbstoffe üblichen Färbeverfahren Baumwolle in echten gelben Tönen. Von den Echtheiten können die Licht- und Schweißechtheiten hervorgehoben werden.

**Beispiel 23**

Eine Lösung von 48,3 Teilen 1-(4′-Sulfophenyl)-3-carboxy-4-(4′-amino-2′-sulfo-phenyl-1′-azo)-5-pyrazolon in 750 Teilen Eiswasser wird bei einer Temperatur zwischen 0 und 5 °C und einem pH-Wert von 5 mit 18,5 Teilen Cyanurfluorid umgesetzt. Sobald keine freien Aminogruppen mehr nachweisbar sind, werden 36,7 Teile 4-(ß-Sulfatoethylsulfonyl)-1-(ß-aminoethyl)-benzol hinzugegeben, und die Kondensationsreaktion wird bei 40 °C und einem pH-Wert von 7 durchgeführt. Der erhaltene erfindungsgemäße Farbstoff wird mit Kaliumchlorid ausgefällt und getrocknet. Es wird ein elektrolythaltiges Pulver des Alkalimetallsalzes des Azofarbstoffes der Formel

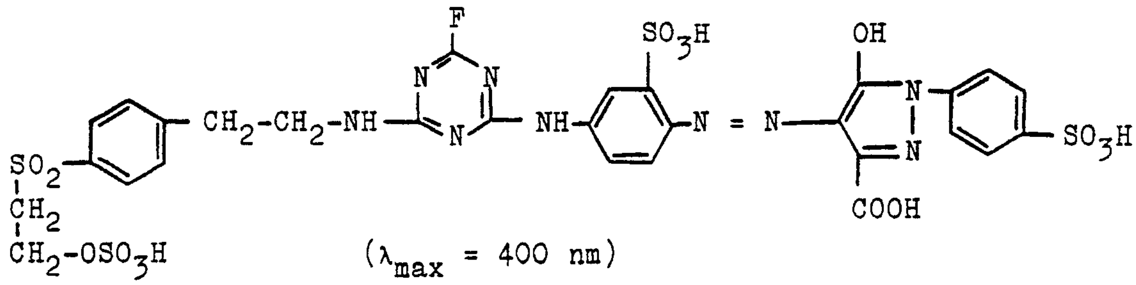

($\lambda_{max}$ = 400 nm)

erhalten, der nach üblichen Färbeverfahren für faserreaktive Farbstoffe Baumwolle in echten goldgelben Tönen färbt.

**Beispiele 24 bis 55**

Weitere erfindungsgemäße Farbstoffe entsprechend einer allgemeinen Formel (24)

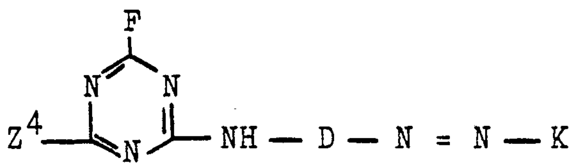

(24)

sind in den nachfolgenden Tabellenbeispielen mit Hilfe der dort angegebenen Komponenten beschrieben. Sie lassen sich in erfindungsgemäßer Weise, beispielsweise analog den Ausführungsbeispielen 22 und 23 unter Anwendung des Kondensationsproduktes aus einer Diaminobenzolsulfonsäure entsprechend der Formel $H_2N$-D-$NH_2$ , Cyanurfluorid und dem Amin der allgemeinen Formel (19) als Diazokomponente Z-D-$NH_2$ und der Kupplungskomponente H-K herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Kupplungskomponente H-K | Diaminobenzolsulfonsäure | $H-Z^4$ entspr. Amin (19) | Farbton |
|---|---|---|---|---|
| 24 | 1-(4'-Sulfophenyl)-3-carboxy-5-pyrazolon | 1,4-Diaminobenzol-2,5-disulfonsäure | 4-(ß-Sulfatoethylsulfonyl)-1-(ß-aminoethyl)-benzol | gelb (395) |
| 25 | 1-Phenyl-3-carboxy-5-pyrazolon | 1,3-Diaminobenzol-4,6-disulfonsäure | dito | gelb |
| 26 | 1,4-Dimethyl-2-hydroxy-3-sulfo-6-pyridon | dito | dito | grünstichig gelb |
| 27 | 1-Ethyl-4-methyl-3-carbamoyl-2-hydroxy-6-pyridon | dito | 4-(ß-Sulfatoethylsulfonyl)-2-Sulfo-1-(ß-aminoethyl)-benzol | grünstichig gelb |
| 28 | dito | dito | 4-(ß-Sulfatoethylsulfonyl)-1-(ß-aminoethyl)-benzol | grünstichig gelb |
| 29 | 1-(2'-Methyl-4'-sulfophenyl)-3-carboxy-5-pyrazolon | 1,3-Diaminobenzol-4-sulfonsäure | dito | gelb |
| 30 | 3,6-Disulfo-1-naphthol | dito | dito | orange |
| 31 | 3,8-Disulfo-1-naphthol | dito | dito | scharlach |
| 32 | 4,8-Disulfo-1-naphthol | dito | dito | gelbstichig rot |
| 33 | 3-Sulfo-7-(3'-sulfophenyl)-amino-1-naphthol | dito | dito | orange |
| 34 | 1-Ethyl-2-hydroxy-4-methyl-5-carbamoyl-6-pyridon | dito | dito | gelb |
| 35 | 3-Sulfo-7-acetylamino-1-naphthol | dito | dito | orange |

| Bsp. | Kupplungskomponente H-K | Diaminobenzolsulfonsäure | $H-Z^4$ entspr. Amin (19) | Farbton |
|---|---|---|---|---|
| 36 | 1-Naphthol-6-acetylamino-3-sulfonsäure | dito | dito | orange |
| 37 | 1-(2'-Sulfoethyl)-4-methyl-3-cyano-2-hydroxy-6-pyridon | 1,3-Diaminobenzol-4-sulfonsäure | 4-(ß-Sulfatoethylsulfonyl)-1-(ß-aminoethyl)-benzol | gelb |
| 38 | dito | 1,4-Diaminobenzol-2-sulfonsäure | dito | gelb |
| 39 | 1-Ethyl-4-methyl-3-sulfomethyl-6-hydroxy-2-pyridon | 1,3-Diaminobenzol-4-sulfonsäure | dito | gelb |
| 40 | 1-(4'-Sulfophenyl)-3-carboxy-5-pyrazolon | dito | 4-(ß-Sulfatoethylsulfonyl)-2-sulfo-1-(ß-aminoethyl)-benzol | gelb (407) |
| 41 | 1-(4'-Sulfophenyl)-3-methyl-5-pyrazolon | dito | 4-(ß-Sulfatoethylsulfonyl)-1-(ß-aminoethyl)-benzol | gelb |
| 42 | dito | 1,4-Diaminobenzol-2-sulfonsäure | dito | gelb |
| 43 | 1-Acetylamino-3,6-disulfo-8-naphthol | dito | 4-(ß-Sulfatoethylsulfonyl)-1-(ß-aminoethyl)-benzol | rot |
| 44 | dito | dito | 4-Vinylsulfonyl-1-(ß-aminoethyl)-benzol | rot |
| 45 | dito | dito | 4-(ß-Sulfatoethylsulfonyl)-2-sulfo-1-(ß-aminoethyl)-benzol | rot |

| Bsp. | Kupplungskomponente H-K | Diaminobenzolsulfonsäure | $H-Z^4$ entspr. Amin (19) | Farbton |
|---|---|---|---|---|
| 46 | dito | 1,3-Diaminobenzol-4-sulfonsäure | 4-(ß-Sulfatoethylsulfonyl)-1-(ß-aminoethyl)-benzol | rot |
| 47 | 1-Benzoylamino-3,6-disulfo-8-naphthol | dito | 4-(ß-Sulfatoethylsulfonyl)-1-(ß-aminoethyl)-benzol | rot |
| 48 | 1-Benzoylamino-4,6-disulfo-8-naphthol | dito | dito | rot |
| 49 | 4,8-Disulfo-1-naphthol | 1,3-Diaminobenzol-4-sulfonsäure | 4-(ß-Sulfatoethylsulfonyl)-2-sulfo-1-(ß-aminoethyl)-benzol | rot |
| 50 | 4-Sulfo-naphthol | dito | 4-(ß-Sulfatoethylsulfonyl-1-(ß-aminoethyl)-benzol | rot |
| 51 | 1-Benzoylamino-3,6-disulfo-8-naphthol | 1,4-Diaminobenzol-2-sulfonsäure | dito | rot |
| 52 | 1-Benzoylamino-4,6-disulfo-8-naphthol | dito | 4-(ß-Sulfatoethylsulfonyl)-1-(ß-aminoethyl)-benzol | rot |
| 53 | dito | 1,3-Diamino-2-methylbenzol-5-sulfonsäure | dito | rot |
| 54 | dito | dito | 4-(ß-Sulfatoethylsulfonyl)-2-sulfo-1-(ß-aminoethyl)-benzol | rot |
| 55 | 3-Sulfo-7-(4'-sulfophenyl)-amino-1-naphthol | 1,3-Diaminobenzol-4-sulfonsäure | dito | rot |

**Beispiel 56**

Eine Lösung von 30,3 Teilen 2-Aminonaphthalin-4,8-disulfonsäure in 200 Teilen Wasser wird bei 0 °C mit 6,9 Teilen Natriumnitrit salzsauer diazotiert und mit 15 Teilen 3-Acetylamino-anilin bei einem pH-Wert zwischen 4 und 5 gekuppelt. Die erhaltene Azoverbindung wird mit 19 Teilen Cyanurfluorid bei einer Temperatur von 0 °C und einem pH-Wert von 4 unter starkem Rühren acyliert, das Monokondensationsprodukt mit 36,7 Teilen 4-(ß-Sulfatoethylsulfonyl)-1-(ß-aminoethyl)-benzol bei einem pH-Wert von 5 bis 6 und einer Temperatur von 0 bis 20 °C umgesetzt und der erhaltene erfindungsgemäße Farbstoff mit Kaliumchlorid ausgefällt und isoliert. Das Alkalimetallsalz der Verbindung der Formel

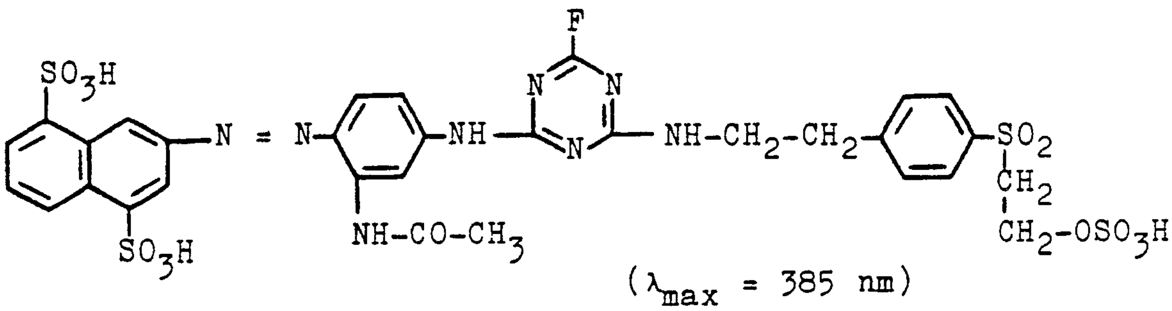

($\lambda_{max}$ = 385 nm)

färbt nach üblichen Färbeverfahren für faserreaktive Farbstoffe Baumwolle in echten rotstichig gelben Tönen. Von den Echtheiten sind insbesondere die Lichtechtheit, die Alkalischweißlichtechtheit und die Chlorwasserechtheit hervorzuheben.

**Beispiele 57 bis 70**

Weitere erfindungsgemäße Farbstoffe entsprechend einer allgemeinen Formel (25)

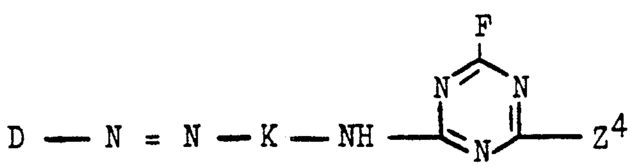

(25)

in welchen $Z^4$ der Rest des Ausgangsamins (19), D der Rest der Diazokomponente ohne faserreaktive Gruppe und K der Rest einer aminogruppenhaltigen Kupplungskomponente entsprechend der Formel H-K-NHR″ ist, sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 56, unter Anwendung der Diazokomponente $D-NH_2$, der Kupplungskomponente H-K-NHR″, Cyanurfluorid und dem Amin der allgemeinen Formel (19) herstellen. Die neuen Verbindungen besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Kupplungskomponente H-K | Diaminobenzolsulfonsäure | $H-Z^4$ entspr. Amin (19) | Farbton |
|---|---|---|---|---|
| 57 | 1,5-Disulfo-2-amino-naphthalin | 3-Acetylamino-anilin | 4-(ß-Sulfatoethylsulfonyl)-1-(ß-aminoethyl)-benzol | gelb |
| 58 | 1,6-Disulfo-2-amino-naphthalin | 3-Amino-phenylharnstoff | dito | goldgelb |
| 59 | dito | N-(3-Aminophenyl)-N'-methyl-harnstoff | dito | goldgelb |
| 60 | 6,8-Disulfo-2-amino-naphthalin | 3-Acetylamino-anilin | 4-(ß-Sulfatoethylsulfonyl)-1-(ß-aminoethyl)-benzol | goldgelb |
| 61 | dito | 2-Sulfo-5-acetylamino-anilin | dito | goldgelb |
| 62 | 3,6,8-Trisulfo-2-amino-naphthalin | 3-Amino-phenylharnstoff | dito | goldgelb (416) |
| 63 | dito | dito | 4-(ß-Sulfatoethylsulfonyl)-2-sulfo-1-(aminoethyl)-benzol | goldgelb (408) |
| 64 | dito | dito | 4-(ß-Sulfatoethylsulfonyl)-1-(ß-aminoethyl)-benzol | goldgelb |
| 65 | dito | N-Phenyl-N'-(3-amino-phenyl)-harnstoff | 4-(ß-Sulfatoethylsulfonyl)-1-(ß-aminoethyl)-benzol | goldgelb |
| 66 | dito | N-(3-Aminophenyl)-N'-methyl-harnstoff | dito | goldgelb |
| 67 | 4-(ß-Sulfatoethylsulfonyl)-anilin | 3-Acetylamino-anilin | dito | goldgelb |

| Bsp. | Kupplungskomponente H-K | Diaminobenzolsulfonsäure | $H-Z^4$ entspr. Amin (19) | Farbton |
|---|---|---|---|---|
| 68 | 3-(ß-Sulfatoethylsulfonyl)-anilin | dito | dito | goldgelb |
| 69 | 6-(ß-Sulfatoethylsulfonyl)-8-sulfo-2-aminonaphthalin | dito | dito | goldgelb |
| 70 | 8-(ß-Sulfatoethylsulfonyl)-6-sulfo-2-aminonaphthalin | dito | dito | goldgelb |

**Beispiel 71**

95 Teile Cyanurfluorid werden in bekannter Weise erst mit 160 Teilen 1-Amino-3,6-disulfo-8-naphthol und anschließend mit 155 Teilen 4-(ß-Sulfatoethylsulfonyl)-1-(ß-aminoethyl)-benzol zum Dikondensationsprodukt umgesetzt, das sodann zur Lösung des Diazoniumsalzes von 87 Teilen 1-Aminobenzol-2-sulfonsäure gegeben wird; die Kupplungsreaktion erfolgt bei einem pH-Wert zwischen 4 und 4,5. Der gebildete erfindungsgemäße Farbstoff wird mit Kaliumchlorid ausgefällt. Es wird das Alkalimetallsalz der Verbindung der Formel

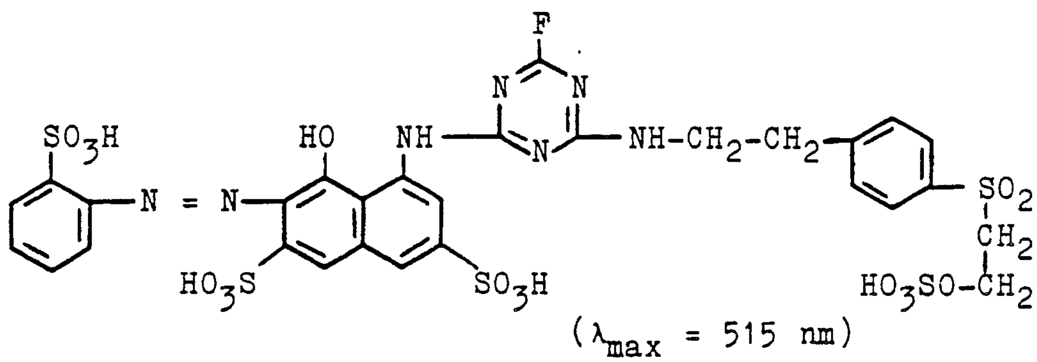

($\lambda_{max}$ = 515 nm)

erhalten, das Baumwolle in leuchtend roten, echten Tönen färbt. Von den Echtheiten können die Waschechtheiten und die Lichtechtheiten der mit Wasser oder einer Schweißlösung befeuchteten Färbungen hervorgehoben werden.

**Beispiele 72 bis 111**

Weitere erfindungsgemäße Farbstoffe entsprechend einer allgemeinen Formel (26)

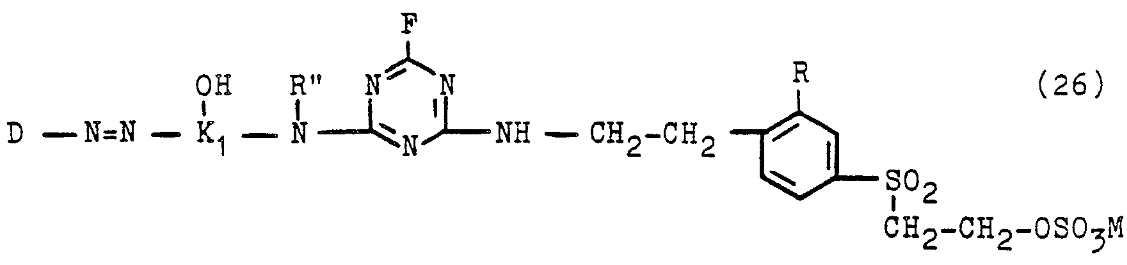

(26)

sind in den nachfolgenden Tabellenbeispielen mit Hilfe der in Formel (26) angegebenen Formelreste beschrieben. Sie lassen sich in erfindungsgemäßer Weise, beispielsweise analog dem Ausführungsbeispiel 71, unter Anwendung der Diazokomponente D-$NH_2$ , der Aminonaphthol-sulfonsäure entsprechend einer Formel H(OH)$K_1$-NHR″ als naphtholischer Kupplungskomponente sowie Cyanurfluorid und dem entsprechenden Amin der allgemeinen Formel (19) herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest D | Kupplungskomponente $H(OH)K_1$-NHR" | Subst. R | Farbton |
|---|---|---|---|---|
| 72 | 4-Sulfo-1-naphthyl | 1-Amino-3,6-disulfo-8-naphthol | Wasserstoff | rot |
| 73 | 6-Sulfo-1-naphthyl | dito | dito | rot |
| 74 | 1-Sulfo-2-naphthyl | dito | dito | rot |
| 75 | 5-Sulfo-2-naphthyl | dito | dito | rot |
| 76 | 6-Sulfo-2-naphthyl | dito | dito | rot |
| 77 | 4-Methoxy-2-sulfo-phenyl | dito | dito | blaustichig rot |
| 78 | 4-Phenoxy-2-sulfo phenyl | dito | dito | dito |
| 79 | 4-Methyl-2-sulfo-phenyl | dito | dito | rot |
| 80 | 4-Sulfo-phenyl | dito | dito | rot (519) |
| 81 | 3-Sulfo-phenyl | dito | dito | rot |
| 82 | 1,5-Disulfo-2-naphthyl | dito | dito | rot (520) |
| 83 | 4,8-Disulfo-2-naphthyl | dito | dito | rot |
| 84 | 2-Sulfo-phenyl | 1-Amino-4,6-disulfo-8-naphthol | dito | rot |
| 85 | dito | 1-Amino-4-sulfo-8-naphthol | dito | rotorange |

| Bsp. | Rest D | Kupplungskomponente $H(OH)K_1-NHR''$ | Subst. R | Farbton |
|---|---|---|---|---|
| 86 | 4,6-Disulfo-phenyl | 2-Amino-6-sulfo-8-naphthol | Wasserstoff | rotorange |
| 87 | 4-Sulfo-phenyl | 2-Amino-7-sulfo-5-naphthol | dito | orange |
| 88 | 1,5-Disulfo-2-naphthyl | 2-Amino-7-sulfo-5-naphthol | dito | orange |
| 89 | dito | 2-Methylamino-7-sulfo-5-naphthol | dito | orange |
| 90 | dito | dito | Sulfo | orange |
| 91 | 4-Methoxy-2-sulfo-phenyl | 3-Amino-7-sulfo-5-naphthol | dito | scharlach |
| 92 | 6,8-Disulfo-2-naphthyl | dito | dito | scharlach |
| 93 | 4-Methoxy-3-sulfo-phenyl | 2-Amino-7-sulfo-5-naphthol | dito | scharlach (499) |
| 94 | dito | 3-Amino-7-sulfo-5-naphthol | dito | scharlach |
| 95 | 4-(ß-Sulfatoethyl-sulfonyl)-anilin | 1-Amino-3,6-disulfo-8-naphthol | dito | scharlach (490) |
| 96 | 3-(ß-Sulfatoethyl-sulfonyl)-anilin | dito | dito | rot |
| 97 | 2-Sulfo-5-(ß-sulfato-ethylsulfonyl)-anilin | dito | dito | rot |
| 98 | 4-(ß-Sulfatoethyl-sulfonyl)-anilin | 1-Amino-4,6-disulfo-8-naphthol | dito | rot |

| Bsp. | Rest D | Kupplungskomponente $H(OH)K_1-NHR''$ | Subst. R | Farbton |
|---|---|---|---|---|
| 99 | dito | 3-Amino-7-sulfo-5-naphthol | Sulfo | rotorange |
| 100 | 6-Sulfo-8-(ß-sulfatoethylsulfonyl)-2-naphthyl | 2-Amino-7-sulfo-5-naphthol | dito | rotorange |
| 101 | 4-Carboxy-phenyl | 1-Amino-3,6-disulfo-8-naphthol | dito | rot (498) |
| 102 | 2,4-Disulfo-phenyl | dito | dito | rotorange |
| 103 | 2,5-Disulfo-phenyl | dito | dito | rotorange |
| 104 | 2-Sulfo-phenyl | 2-Amino-7-sulfo-5-naphthol | dito | rotorange |
| 105 | 3,6,8-Trisulfo-2-naphthyl | dito | dito | rotorange |
| 106 | dito | dito | Wasserstoff | rotorange |
| 107 | 4-(ß-Sulfatoethylsulfonyl)-phenyl | 1-(ß-Aminoethyl)-4-methyl-3-carbamoyl-2-hydroxy-pyrid-6-on | Wasserstoff | gelb |
| 108 | dito | 1-(ß-Aminoethyl)-4-methyl-3-cyano-2-hydroxy-pyrid-6-on | Wasserstoff | gelb |
| 109 | 1-Sulfo-6-carboxy-2-naphthyl | 1-Amino-3,6-disulfo-8-naphthol | Wasserstoff | blaustichig rot (545) |
| 110 | 2-Sulfo-phenyl | 2-Amino-7-sulfo-5-naphthol | Wasserstoff | rotorange |
| 111 | 1,5-Disulfo-2-naphthyl | dito | Sulfo | scharlach |

**Beispiel 112**

Bei 0°C und einem pH-Wert von 4 bis 5 werden 47 Teile der bekannten Aminodisazoverbindung der Formel

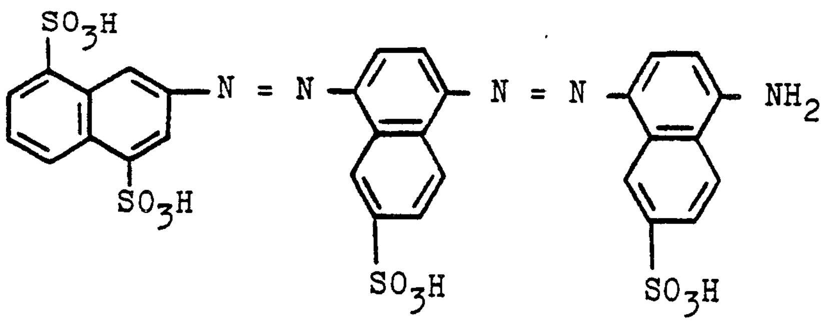

in 300 Teilen Wasser mit 8 Teilen Cyanurfluorid umgesetzt. Das entstandene Produkt wird anschließend mit 21 Teilen 4-(ß-Sulfatoethylsulfonyl)-1-(ß-aminoethyl)-benzol bei einer Temperatur von 20°C und einem pH-Wert zwischen 5 und 6 umgesetzt. Nach vier Stunden ist die Reaktion beendet. Der entstandene erfindungsgemäße Farbstoff wird mit Kaliumchlorid ausgefällt. Man erhält das elektrolythaltige Farbstoffpulver des Alkalimetallsalzes der Disazoverbindung

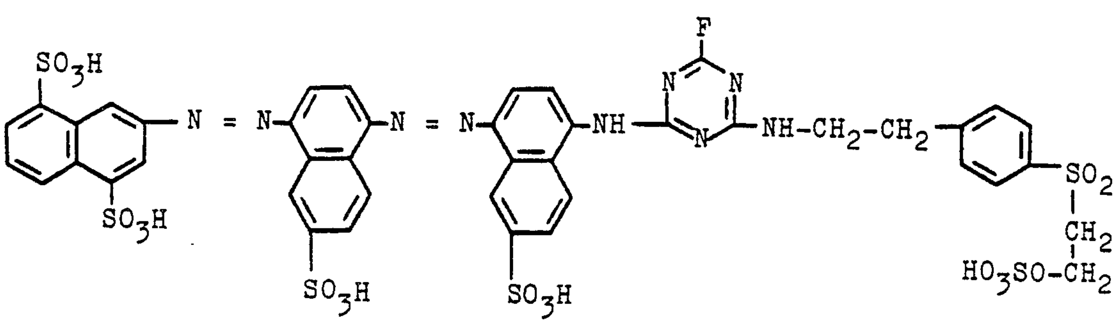

($\lambda_{max}$ = 470 nm)

die Baumwolle in echten rötlich-braunen Tönen färbt.

**Beispiele 113 bis 117**

In den nachfolgenden Tabellenbeispielen sind weitere erfindungsgemäße Farbstoffe entsprechend einer allgemeinen Formel $D^5$-$Z^3$ beschrieben, die in erfindungsgemäßer Weise so analog dem Ausführungsbeispiel 112, durch Umsetzung des in dem jeweiligen Tabellenbeispiel aus dem formelmäßig angegebenen Rest $D^5$ ersichtlichen Ausgangs-Aminodisazo-Farbstoffes entsprechend der allgemeinen Formel $D^5$-$NH_2$ mit Cyanurfluorid und 4-(ß-Sulfatoethylsulfonyl)-1-(ß-aminoethyl)-benzol als der Aminoverbindung der Formel (19) hergestellt werden können. Sie besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest $D^5$- | Farbton |
|---|---|---|
| 113 | 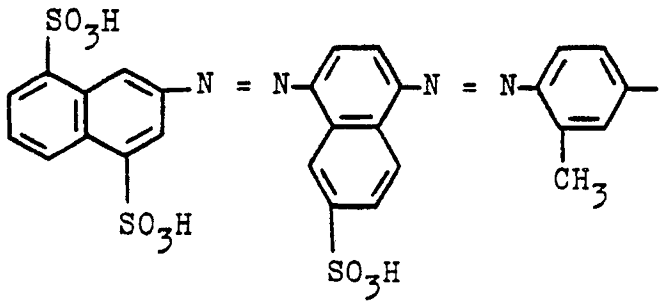 | braun |
| 114 | 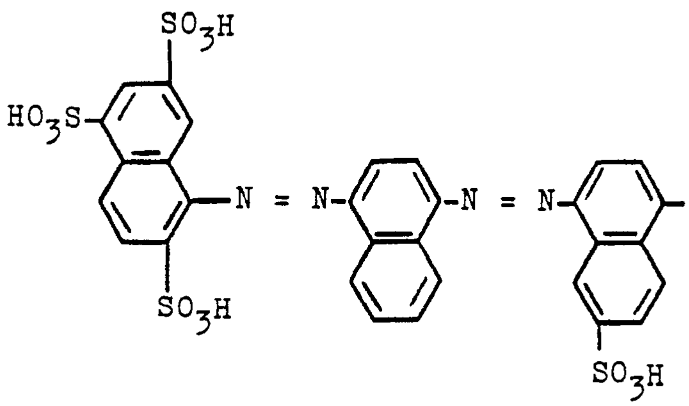 | rotbraun |
| 115 | 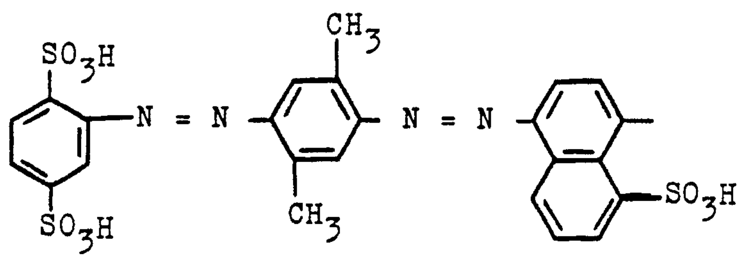 | orangebraun (453) |
| 116 | 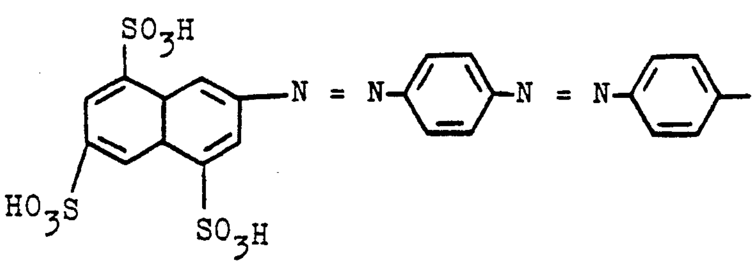 | orangebraun |
| 117 | 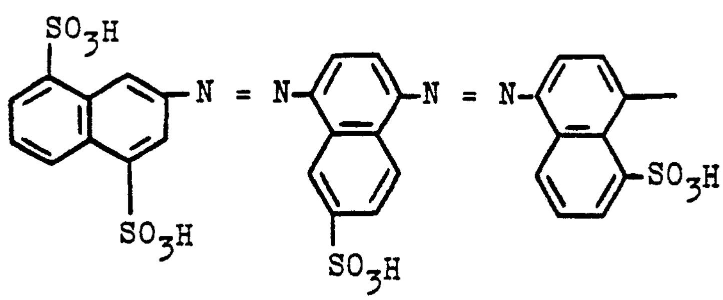 | rotbraun |

**Beispiel 118**

Zu einer Lösung des Natriumsalzes von 18,9 Teilen 2-Aminophenol-4-sulfonsäure in 70 Teilen Wasser und 90 Teilen Eis gibt man 7,4 Teile 96%ige Schwefelsäure und diazotiert mit 14 Teilen einer wäßrigen 40%igen Natriumnitritlösung bei 0 bis 10° C unter einstündigem Rühren. Überschüssiges Nitrit wird mittels Amidosulfonsäure zerstört. Es wird eine Lösung von 27,5 Teilen des Natriumsalzes von 1-Naphthol-7-amino-3-sulfonsäure in 200 Teilen Wasser hinzugegeben und die Kupplungsreaktion bei einem pH-Wert zwischen 4,5 und 5 gehalten. Anschließend werden 25 Teile Kupfer(II)-sulfatpentahydrat zugesetzt, und es wird noch 1 Stunde bei einem pH-Wert zwischen 5 und 6 und bei etwa 20° C weitergerührt. Der Reaktionsansatz wird mit etwas Kieselgur versetzt und filtriert und das Filtrat unter gutem Rühren bei 0° C langsam mit 13,6 Teilen 2,4,6-Trifluor-1,3,5-triazin (Cyanurfluorid) versetzt, wobei man mittels einer wäßrigen 2n-Natriumcarbonat-Lösung den pH-Wert zwischen 4 und 4,5 hält. Anschließend wird dem Reaktionsansatz bei etwa 20° C und unter Einhaltung eines pH-Wertes zwischen 5 und 6 eine Suspension von 33 Teilen 4-(ß-Sulfatoethylsulfonyl)-1-(ß-aminoethyl)-benzol hinzugegeben. Man rührt den Ansatz noch 4 Stunden bei etwa 20° C weiter, filtriert ihn sodann nach Zugabe von etwas Kieselgur und Einstellung eines pH-Wertes von 5 und dampft das Filtrat ein und isoliert den Farbstoff durch Aussalzen mittels eines Elektrolyten, wie beispielsweise Natriumchlorid oder Kaliumchlorid.

Man erhält das Alkalimetallsalz des Kupferkomplex-Monoazofarbstoffes der Formel

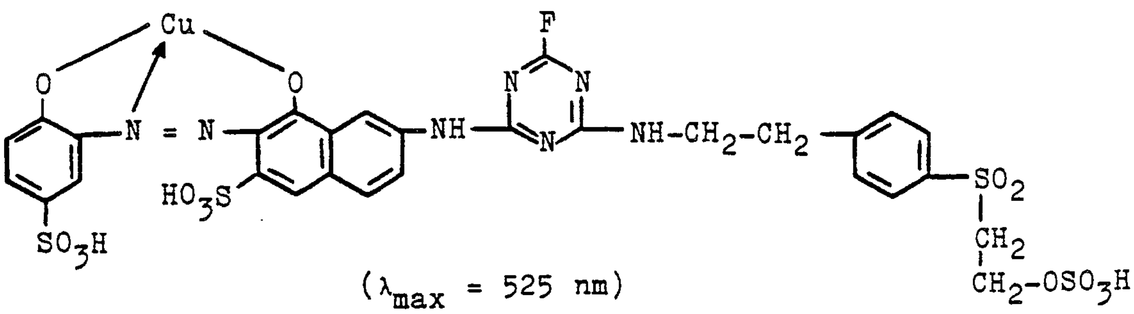

($\lambda_{max}$ = 525 nm)

als elektrolytsalzhaltiges Pulver. Der erfindungsgemäße Farbstoff liefert nach den in der Technik für faserreaktive Farbstoffe üblichen Applikations- und Fixiermethoden, wie beispielsweise nach bekannten Auszieh- und Klotzverfahren auf Wolle oder synthetischen Polyamidfasern und insbesondere auf Cellulosefasern rotviolette Färbungen von hoher Farbstärke, gutem Farbaufbau und guten Echtheiten, von denen insbesondere die guten Waschechtheiten, die gute Lichtechtheit und die guten Schweißechtheiten hervorzuheben sind.

**Beispiele 119 bis 132**

In den nachfolgenden Tabellenbeispielen sind weitere erfindungsgemäße Farbstoffe entsprechend einer allgemeinen Formel (27)

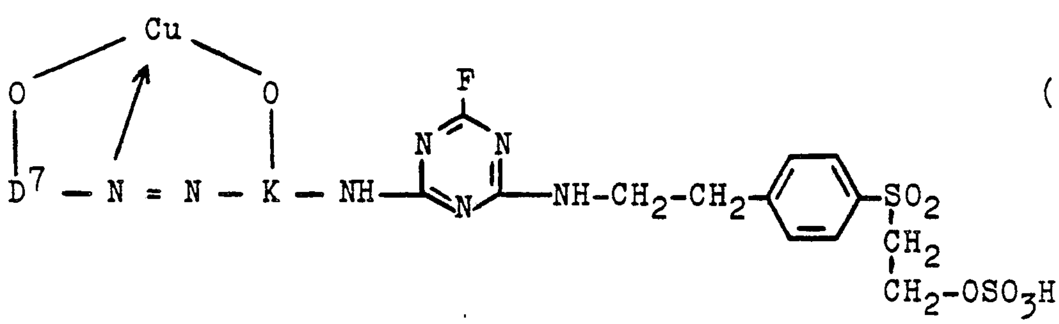

(27)

mittels ihrer Komponenten beschrieben. Sie lassen sich in erfindungsgemäßer Weise, beispielsweise analog den Angaben des Ausführungsbeispieles 118, durch Umsetzung der aus der Formel ersichtlichen Komponenten, wie der phenolischen oder naphtholischen Diazokomponente entsprechend der allgemeinen Formel HO-$D^7$-$NH_2$ der aminogruppenhaltigen Kupplungskomponente H-K(OH)-$NH_2$ , Cyanurfluorid und 4-(ß-Sulfatoethylsulfonyl)-1-(ß-aminoethyl)-benzol herstellen und liefern auf den in der Beschreibung genannten Materialien, insbesondere auf Cellulosefasermaterialien, nach den üblichen Färbeverfahren für faserreaktive Farbstoffe kräftige und echte Färbungen in dem in dem jeweiligen Tabellenbeispiel angegebenen Farbton.

| Bsp. | Diazokomponente HO-D'-$NH_2$ | Kupplungskomponente H-K(OH)-$NH_2$ | Farbton |
|---|---|---|---|
| 119 | 4-(β-Sulfatoethylsulfonyl)-2-aminophenol | 3-Sulfo-6-amino-1-naphthol | violett |
| 120 | 5-(β-Sulfatoethylsulfonyl)-4-methoxy-2-aminophenol | 3,6-Disulfo-1-amino-8-naphthol | blau |
| 121 | 5-(β-Sulfatoethylsulfonyl)-2-amino-phenol | 4,6-Disulfo-1-amino-8-naphthol | violett |
| 122 | 5-Sulfo-2-aminophenol | dito | violett |
| 123 | 4-(β-Sulfatoethylsulfonyl)-2-aminophenol | 3-Sulfo-7-amino-1-naphthol | violett |
| 124 | 5-Sulfo-4-methoxy-2-aminophenol | 3,6-Disulfo-1-amino-8-naphthol | blau |
| 125 | 8-(β-Sulfatoethylsulfonyl)-6-sulfo-2-amino-1-naphthol | dito | blau |
| 126 | 6,8-Disulfo-2-amino-1-naphthol | dito | blau |
| 127 | 4-Sulfo-2-aminophenol | 3-Sulfo-6-amino-1-naphthol | violett |
| 128 | dito | 3,6-Disulfo-1-amino-8-naphthol | violett |
| 129 | dito | 1-(2'-Sulfo-4'-aminophenyl)-3-methyl-5-pyrazolon | rotstichig braun |
| 130 | dito | 1-(2'-Sulfo-4'-aminophenyl)-3-carboxy-5-pyrazolon | dito |
| 131 | 4,6-Disulfo-2-aminophenol | dito | dito |
| 132 | 5-Sulfo-2-aminophenol | 3,6-Disulfo-1-amino-8-naphthol | violett |

## Ansprüche

1. Eine Verbindung, die der allgemeinen Formel (1)

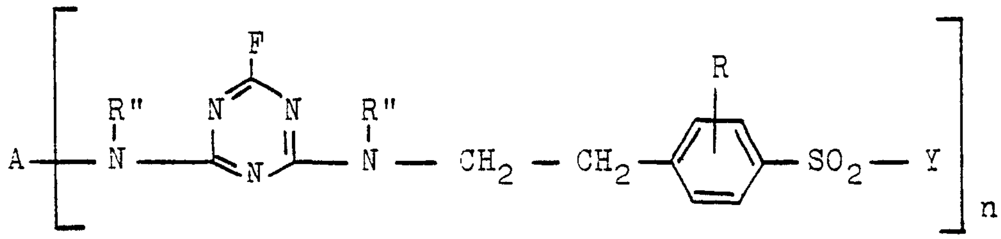

(1)

entspricht, in welcher bedeutet:
A ist ein Rest eines Farbstoffes, bevorzugt eines wasserlöslichen sulfogruppenhaltigen Farbstoffes und bevorzugt aus der Azoreihe;
n ist die Zahl 1 oder 2;
R″ ist ein Wasserstoffatom oder eine Alkylgruppe von 1 bis 4 C-Atomen;
R ist ein Wasserstoffatom oder eine Sulfogruppe;
Y ist die Vinylgruppe oder eine ß-Sulfatoethylgruppe.

2. Verbindung nach Anspruch 1, dadurch gekennzeichnet, daß A der Rest eines sulfogruppenhaltigen Mono- oder Disazofarbstoffes ist.

3. Verbindung nach Anspruch 1 oder 2, dadurch gekennzeichnet, daß beide R″ für Wasserstoff und Y für ß-Sulfatoethyl steht.

4. Verbindung nach Anspruch 1 entsprechend der allgemeinen Formel (4a) oder (4b)

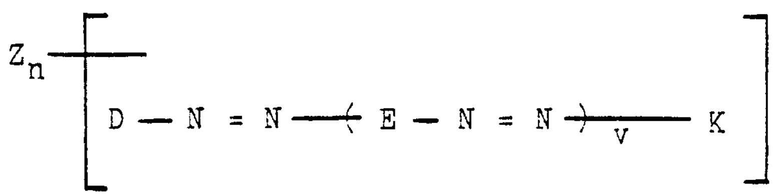

(4a)

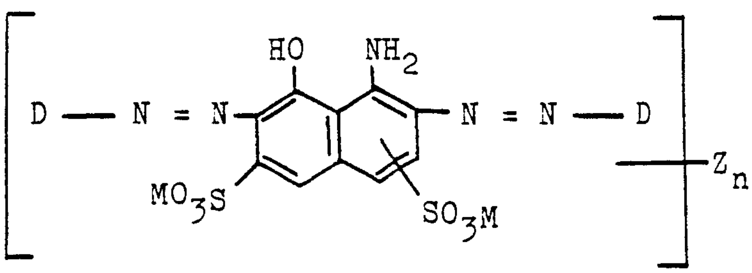

(4b)

in welcher D für den Rest einer Diazokomponente steht, E den bivalenten Rest einer kupplungsfähigen und diazotierbaren Verbindung und K den Rest einer Kupplungskomponente bedeuten, v für die Zahl Null oder 1 steht, in die Zahl 1 oder 2 ist sowie Z einen Rest der allgemeinen Formel (3)

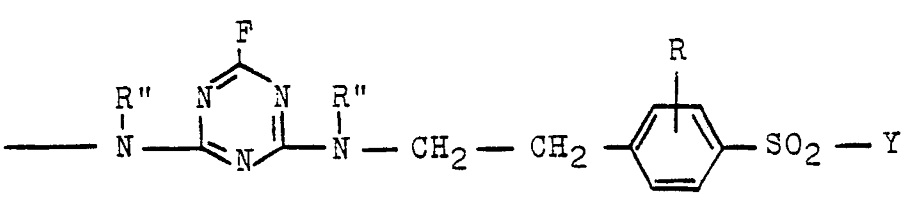

(3)

bedeutet, in welcher R″, R und Y die in Anspruch 1 oder 3 genannten Bedeutungen haben, wobei der Rest Z an den Rest D oder den Rest K oder im Falle von n = 2 jeweils an D und K bzw. an beide D gebunden ist und M für ein Wasserstoffatom oder ein Alkalimetall steht.

5. Verbindung nach Anspruch 1 entsprechend der allgemeinen Formel (4c)

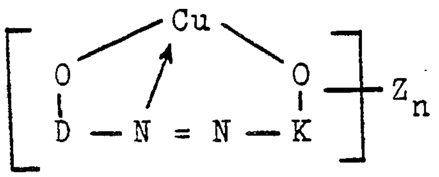

(4c)

in welcher D für den Rest einer Diazokomponente steht, K den Rest einer Kupplungskomponente bedeutet, Z einen in Anspruch 4 genannten und definierten Rest der allgemeinen Formel (3) bedeutet, n die Zahl 1 oder 2, bevorzugt 1, ist und der Rest Z an den Rest D oder den Rest K oder im Falle von n = 2 jeweils an D und K gebunden ist.

6. Verbindung nach Anspruch 4, dadurch gekennzeichnet, daß n für die Zahl 1 steht und Z an K gebunden ist und D einen Rest der allgemeinen Formel

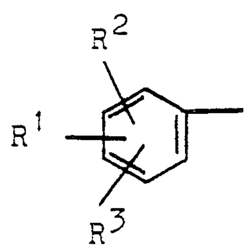

oder

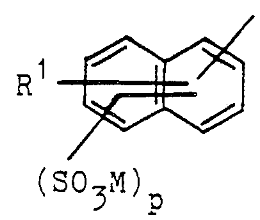

bedeutet, in welchen

$R^1$ ein Wasserstoffatom, eine Sulfogruppe oder eine Gruppe der allgemeinen Formel $-SO_2-Y$ mit Y der in Anspruch 4 genannten Bedeutung ist,

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

p die Zahl Null, 1 oder 2 bedeutet und

M ein Wasserstoffatom oder ein Alkalimetall bedeutet.

7. Verbindung nach Anspruch 4, dadurch gekennzeichnet, daß n für die Zahl 1 steht und Z an D gebunden ist und D einen Phenylenrest der allgemeinen Formel

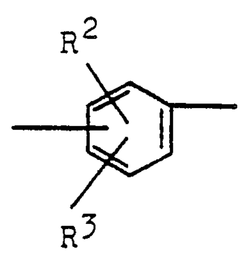

bedeutet, in welchen

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist und

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro,

Sulfamoyl, N-($C_1$-$C_4$-Alkyl)-sulfamoyl, Alkylsulfonyl von 1 bis 4 C-Atomen, Phenylsulfonyl oder Phenoxy ist.

8. Verbindung nach Anspruch 4 oder 7, dadurch gekennzeichnet, daß n für die Zahl 1 steht, Z an D gebunden ist und K einen Rest der allgemeinen Formel

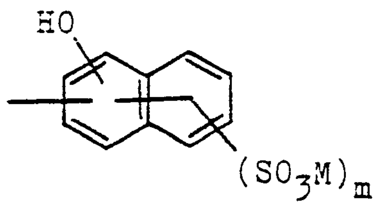

oder

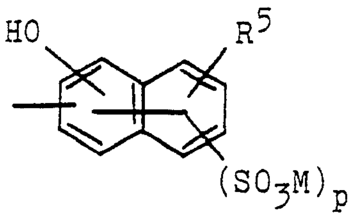

oder

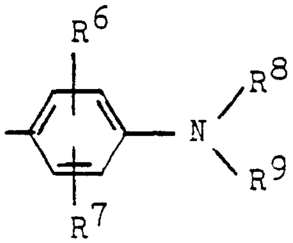

oder

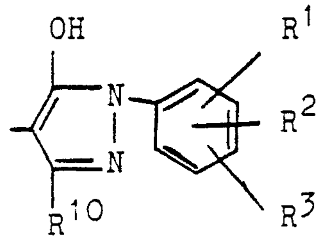

oder

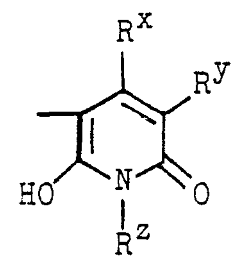

bedeutet, in welchen

$R^1$, $R^2$ und $R^3$ die in Anspruch 6 genannten Bedeutungen haben,

$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy substituiertes Benzoylamino bedeutet,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ Wasserstoff, Alkyl von 1 bis 4 C-Atomen, Alkoxy von 1 bis 4 C-Atomen, Chlor oder Alkanoylamino von 2 bis 7 C-Atomen oder eine Ureido- oder Phenylureidogruppe ist,

$R^8$ Wasserstoff oder Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann,

$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,

$R^{10}$ für Wasserstoff, Alkyl von 1 bis 4 C-Atomen, Cyano, Carboxy, Carbalkoxy von 2 bis 5 C-Atomen, Carbonamido oder Phenyl steht,

$R^x$ Wasserstoff, Alkyl von 1 bis 4 C-Atomen oder durch Alkoxy von 1 bis 4 C-Atomen oder Cyano substituiertes Alkyl von 1 bis 4 C-Atomen ist,

$R^y$ Wasserstoff, Sulfo, Sulfoalkyl mit einem Alkylrest von 1 bis 4 C-Atomen, Cyano oder Carbamoyl ist,

$R^z$ Wasserstoff oder Alkyl von 1 bis 6 C-Atomen, bevorzugt von 1 bis 4 C-Atomen, ist, das durch Phenyl, Sulfo oder Sulfophenyl substituiert sein kann,

m für die Zahl Null, 1, 2 oder 3 steht,

p die Zahl Null, 1 oder 2 bedeutet und

M ein Wasserstoffatom oder ein Alkalimetall ist.

9. Verbindung nach Anspruch 4 oder 6, dadurch gekennzeichnet, daß n für die Zahl 1 steht, der Rest Z an K gebunden ist und die Gruppe -K-Z einen Rest der Formel

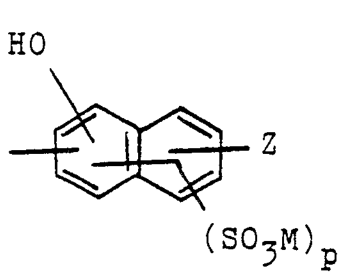

oder

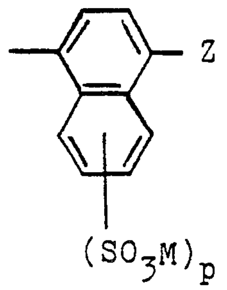

oder

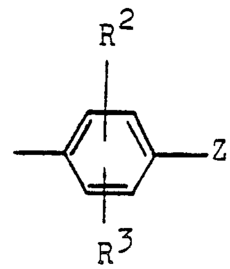

bedeutet, in welchen $R^2$ gleich Wasserstoff, Methyl, Methoxy, Chlor, Carboxy oder Sulfo, $R^3$ gleich Wasserstoff, Methyl, Methoxy, Chlor, Carboxy, Sulfo oder Acetylamino, p die Zahl Null, 1 oder 2 und M gleich Wasserstoff oder ein Alkalimetall ist sowie Z die in Anspruch 4 genannte Bedeutung besitzt.

10. Verbindung nach mindestens einem der Ansprüche 4 und 6 bis 9, dadurch gekennzeichnet, daß v für die Zahl 1 steht und E einen Rest der Formel

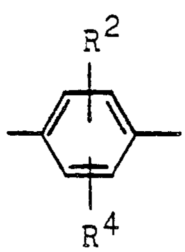

oder

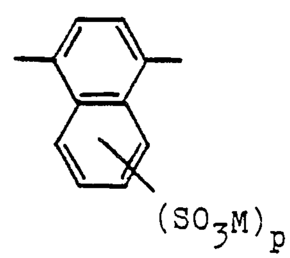

bedeutet, in welcher
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkyl ureido mit 1 bis 4 C-Atomen im Alkylrest, Phenylsulfonyl oder Alkylsulfonyl von 1 bis 4 C-Atomen ist,
p für die Zahl Null, 1 oder 2 steht und
M ein Wasserstoffatom oder ein Alkalimetall bedeutet.

11. Verbindung nach Anspruch 1 entsprechend der allgemeinen Formel

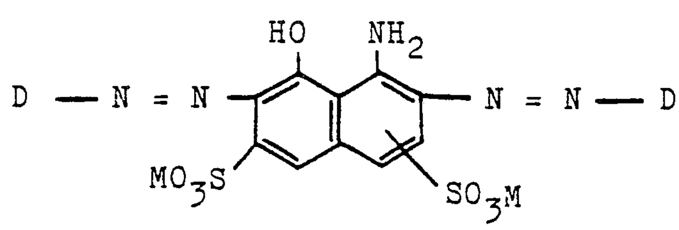

in welcher beide D zueinander gleiche oder voneinander verschiedene Bedeutungen haben und jedes den Rest einer Diazokomponente mit der Bedeutung von mindestens einem der Ansprüche 6 und 7 besitzt und von denen mindestens eine eine faserreaktive Gruppe der in Anspruch 4 genannten und definierten allgemeinen Formel (3) gebunden enthält und M ein Wasserstoffatom oder ein Alkalimetall bedeutet.

12. Verbindung nach Anspruch 1 oder 3 der allgemeinen Formel (16a)

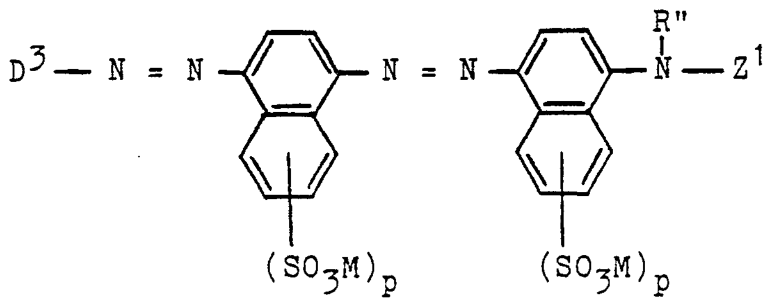

(16a)

in welcher
$D^3$ einen Rest der allgemeinen Formel (10a) oder (10b)

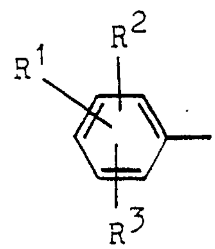

(10a)

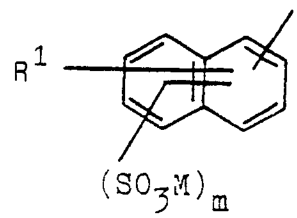

(10b)

ist, in welchen
$R^1$ ein Wasserstoffatom, eine Sulfogruppe oder eine Gruppe der allgemeinen Formel $-SO_2-Y$ mit Y der in Anspruch 1 oder 3 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
m die Zahl Null, 1, 2 oder 3 bedeutet und
M ein Wasserstoffatom oder ein Alkalimetall ist,
$R''$ die in Anspruch 1 oder 3 genannte Bedeutung besitzt,
p für die Zahl Null, 1 oder 2 steht und
$Z^1$ einen Rest der allgemeinen Formel (3a)

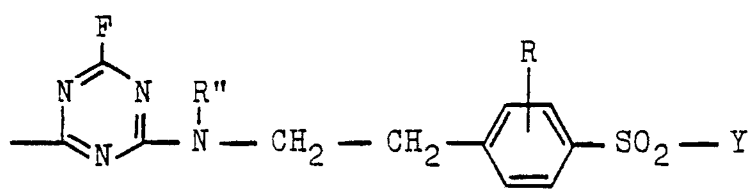

(3a)

mit $R''$, R und Y der in Anspruch 1 oder 3 angegebenen Bedeutung darstellt.

13. Kupferkomplex-Azoverbindung nach Anspruch 5, dadurch gekennzeichnet, daß n für die Zahl 1 steht und Z an K gebunden ist und D einen Rest der allgemeinen Formel

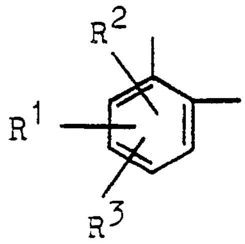

oder

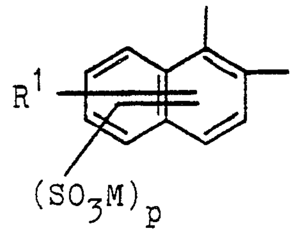

bedeutet, in welchen $R^1$, $R^2$, $R^3$, p und M die in Anspruch 6 genannten Bedeutungen haben, oder daß Z an D gebunden ist und D einen Rest der allgemeinen Formel

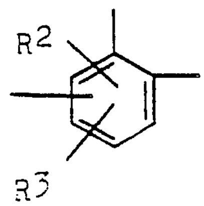

mit $R^2$ und $R^3$ der in Anspruch 6 genannten Bedeutung ist.

14. Kupferkomplex-Azoverbindung nach Anspruch 13, dadurch gekennzeichnet, daß Z an K gebunden ist und -K-Z ein Rest der allgemeinen Formel

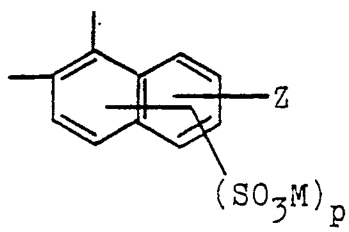

ist,

oder daß Z an D gebunden ist und K einen Rest der allgemeinen Formel

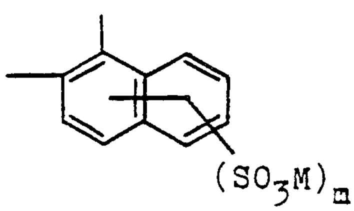

oder

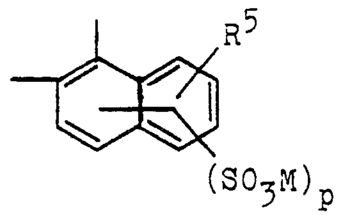

oder

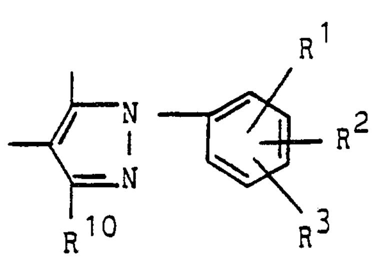

bedeutet, in welchen M, m, p, $R^5$, $R^{10}$, $R^1$, $R^2$ und $R^3$ die in Anspruch 8 genannten Bedeutungen haben.

15. Verbindung nach mindestens einem der Ansprüche 1 bis 14, dadurch gekennzeichnet, daß Y für die ß-Sulfatoethyl-Gruppe steht.

16. Verbindung nach mindestens einem der Ansprüche 1 bis 5, dadurch gekennzeichnet, daß R für ein Wasserstoffatom steht.

17. Verfahren zur Herstellung der in Anspruch 1 genannten und definierten Verbindungen der allgemeinen Formel (1), dadurch gekennzeichnet, daß man die für wasserlösliche Farbstoffe üblichen Vorprodukte, von denen mindestens eines eine Gruppe der allgemeinen Formel (3) enthält, miteinander in üblicher Verfahrensweise zum entsprechenden Farbstoff umsetzt, oder indem man Cyanurfluorid in beliebiger Folge mit einer Aminoverbindung der allgemeinen Formel (18)

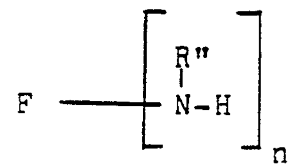

(18)

in welcher F, R″ und n die in Anspruch 1 genannten Bedeutungen haben, und einer Aminoverbindung der allgemeinen Formel (19)

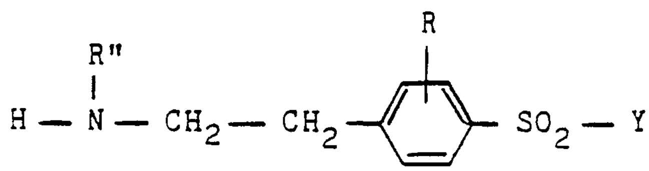

(19)

in welcher R″, R und Y die in Anspruch 1 genannten Bedeutungen haben, analog bekannten Verfahrensweisen solcher Kondensationsreaktionen von Cyanurfluorid mit Aminoverbindungen umsetzt.

18. Verwendung einer Verbindung entsprechend der Formel (1) von mindestens einem der Ansprüche 1 bis 16 zum Färben und Bedrucken von hydroxy- und/oder carbonamidgruppenhaltigem Material, insbesondere Fasermaterial.

19. Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels fixiert, dadurch gekennzeichnet, daß man als Farbstoff eine Verbindung entsprechend der allgemeinen Formel (1) von mindestens einem der Ansprüche 1 bis 16 verwendet.

Patentansprüche für folgenden Vertragsstaat: ES

1. Verfahren zur Herstellung einer Verbindung, die der allgemeinen Formel (1)

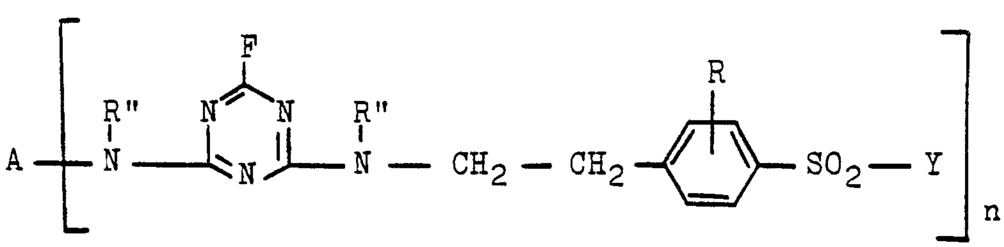

(1)

entspricht, in welcher bedeuten:

A ist ein Rest eines Farbstoffes, bevorzugt eines wasserlöslichen sulfogruppenhaltigen Farbstoffes, und bevorzugt aus der Azoreihe;

n ist die Zahl 1 oder 2;

R″ ist ein Wasserstoffatom oder eine Alkylgruppe von 1 bis 4 C-Atomen;

R ist ein Wasserstoffatom oder eine Sulfogruppe;

Y ist die Vinylgruppe oder eine ß-Sulfatoethylgruppe; dadurch gekennzeichnet, daß man die für wasserlösliche Farbstoffe üblichen Vorprodukte, von denen mindestens eines eine Gruppe der allgemeinen Formel (3) enthält, miteinander in üblicher Verfahrensweise zum entsprechenden Farbstoff umsetzt, oder indem man Cyanurfluorid in beliebiger Folge mit einer Aminoverbindung der allgemeinen Formel (18)

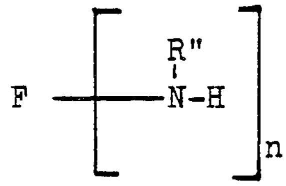

(18)

in welcher F, R″ und n die oben genannten Bedeutungen haben, und einer Aminoverbindung der allgemeinen Formel (19)

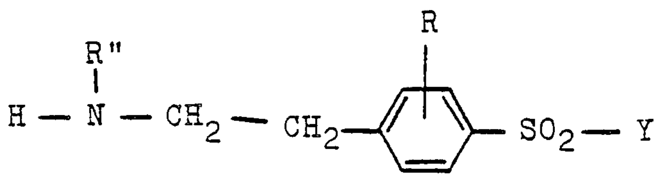

(19)

in welcher R″, R und Y die oben genannten Bedeutungen haben, analog bekannten Verfahrensweisen solcher Kondensationsreaktionen von Cyanurfluorid mit Aminoverbindungen umsetzt.

2. Verfahren nach Anspruch 1, dadurch gekennzeichnet, daß A der Rest eines sulfogruppenhaltigen Mono- oder Disazofarbstoffes ist.

3. Verfahren nach Anspruch 1 oder 2, dadurch gekennzeichnet, daß beide R″ für Wasserstoff und Y für ß-Sulfatoethyl steht.

4. Verfahren nach Anspruch 1, dadurch gekennzeichnet, daß die Verbindung der Formel (1) eine Verbindung entsprechend der allgemeinen Formel (4a) oder (4b)

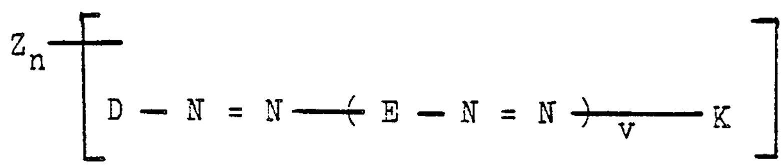

(4a)

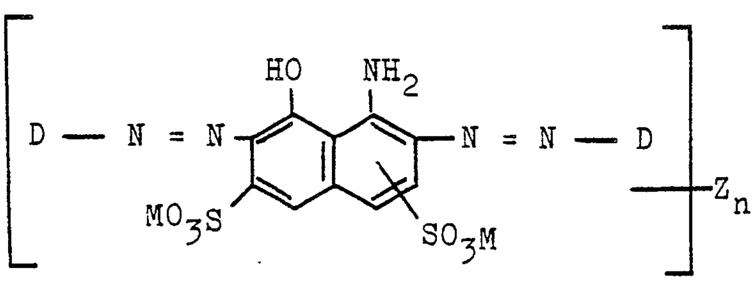

(4b)

ist, in welcher D für den Rest einer Diazokomponente steht, E den bivalenten Rest einer kupplungsfähigen und diazotierbaren Verbindung und K den Rest einer Kupplungskomponente bedeuten, v für die Zahl Null oder 1 steht, n die Zahl 1 oder 2 ist sowie Z einen Rest der allgemeinen Formel (3)

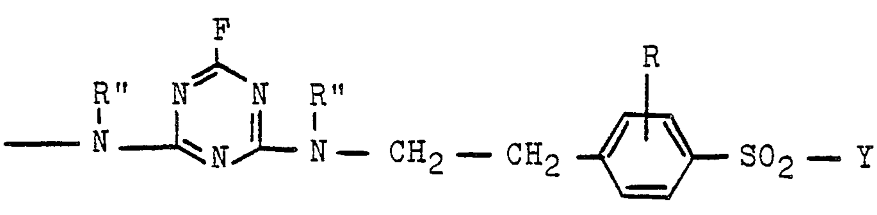

(3)

bedeutet, in welcher R″, R und Y die in Anspruch 1 oder 3 genannten Bedeutungen haben, wobei der Rest Z an den Rest D oder den Rest K oder im Falle von n = 2 jeweils an D und K bzw. an beide D gebunden ist und M für ein Wasserstoffatom oder ein Alkalimetall steht.

5. Verfahren nach Anspruch 1, dadurch gekennzeichnet, daß die Verbindung der Formel (1) eine Verbindung entsprechend der allgemeinen Formel (4c)

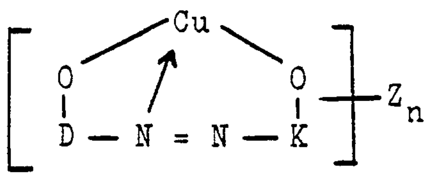

(4c)

ist, in welcher D für den Rest einer Diazokomponente steht, K den Rest einer Kupplungskomponente bedeutet, Z einen in Anspruch 4 genannten und definierten Rest der allgemeinen Formel (3) bedeutet, n die Zahl 1 oder 2, bevorzugt 1, ist und der Rest Z an den Rest D oder den Rest K oder im Falle von n = 2 jeweils an D und K gebunden ist.

6. Verfahren nach Anspruch 4, dadurch gekennzeichnet, daß n für die Zahl 1 steht und Z an K gebunden ist und D einen Rest der allgemeinen Formel

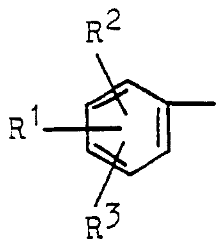

oder

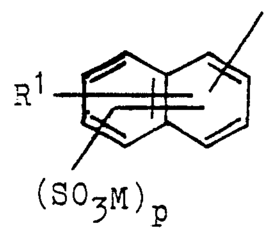

bedeutet, in welchen

$R^1$ ein Wasserstoffatom, eine Sulfogruppe oder eine Gruppe der allgemeinen Formel $-SO_2-Y$ mit Y der in Anspruch 4 genannten Bedeutung ist,

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

p die Zahl Null, 1 oder 2 bedeutet und

M ein Wasserstoffatom oder ein Alkalimetall bedeutet.

7. Verfahren nach Anspruch 4, dadurch gekennzeichnet, daß n für die Zahl 1 steht und Z an D gebunden ist und D einen Phenylenrest der allgemeinen Formel

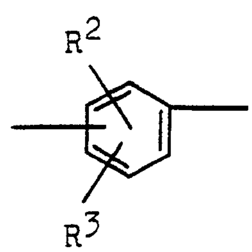

bedeutet, in welchen

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist und

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist.

8. Verfahren nach Anspruch 4 oder 7, dadurch gekennzeichnet, daß n für die Zahl 1 steht, Z an D gebunden ist und K einen Rest der allgemeinen Formel

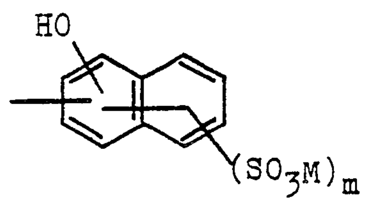

oder

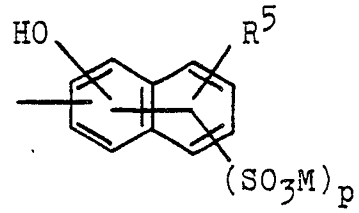

oder

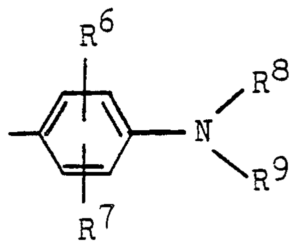

oder

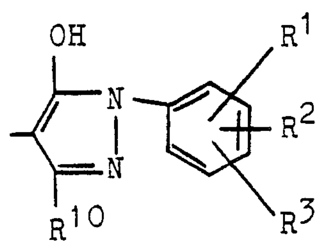

oder

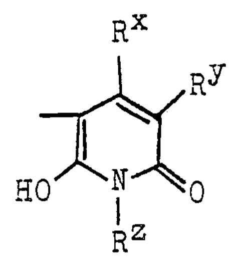

bedeutet, in welchen

$R^1$, $R^2$ und $R^3$ die in Anspruch 6 genannten Bedeutungen haben,

$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy substituiertes Benzoylamino bedeutet,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ Wasserstoff, Alkyl von 1 bis 4 C-Atomen, Alkoxy von 1 bis 4 C-Atomen, Chlor oder Alkanoylamino von 2 bis 7 C-Atomen oder eine Ureido- oder Phenylureidogruppe ist,

$R^8$ Wasserstoff oder Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann,

$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,

$R^{10}$ für Wasserstoff, Alkyl von 1 bis 4 C-Atomen, Cyano, Carboxy, Carbalkoxy von 2 bis 5 C-Atomen, Carbonamido oder Phenyl steht,

$R^x$ Wasserstoff, Alkyl von 1 bis 4 C-Atomen oder durch Alkoxy von 1 bis 4 C-Atomen oder Cyano substituiertes Alkyl von 1 bis 4 C-Atomen ist,

$R^y$ Wasserstoff, Sulfo, Sulfoalkyl mit einem Alkylrest von 1 bis 4 C-Atomen, Cyano oder Carbamoyl ist,

$R^z$ Wasserstoff oder Alkyl von 1 bis 6 C-Atomen, bevorzugt von 1 bis 4 C-Atomen, ist, das durch Phenyl, Sulfo oder Sulfophenyl substituiert sein kann,

m für die Zahl Null, 1, 2 oder 3 steht,

p die Zahl Null, 1 oder 2 bedeutet und

M ein Wasserstoffatom oder ein Alkalimetall ist.

9. Verfahren nach Anspruch 4 oder 6, dadurch gekennzeichnet, daß n für die Zahl 1 steht, der Rest Z an K gebunden ist und die Gruppe -K-Z einen Rest der Formel

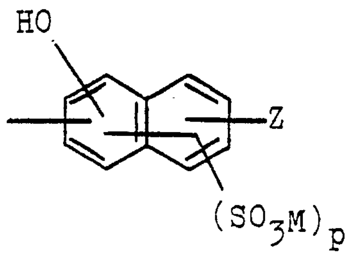

oder

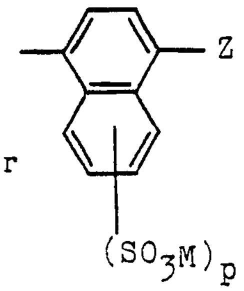

oder

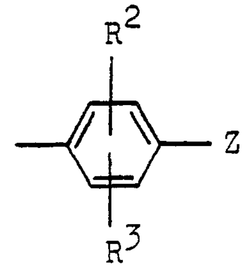

bedeutet, in welchen $R^2$ gleich Wasserstoff, Methyl, Methoxy, Chlor, Carboxy oder Sulfo, $R^3$ gleich Wasserstoff, Methyl, Methoxy, Chlor, Carboxy, Sulfo oder Acetylamino, p die Zahl Null, 1 oder 2 und M gleich Wasserstoff oder ein Alkalimetall ist sowie Z die in Anspruch 4 genannte Bedeutung besitzt.

10. Verfahren nach mindestens einem der Ansprüche 4 und 6 bis 9, dadurch gekennzeichnet, daß v für die Zahl 1 steht und E einen Rest der Formel

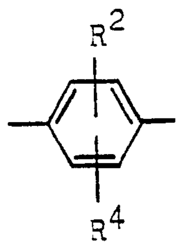

oder

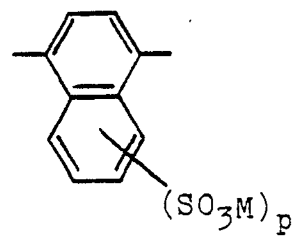

bedeutet, in welcher
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist,
p für die Zahl Null, 1 oder 2 steht und
M ein Wasserstoffatom oder ein Alkalimetall bedeutet.

11. Verfahren nach Anspruch 1, dadurch gekennzeichnet, daß die Verbindung der Formel (1) eine Verbindung entsprechend der allgemeinen Formel

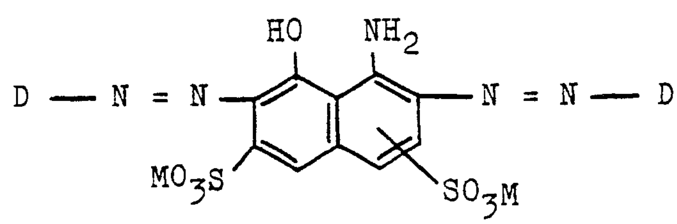

ist, in welcher beide D zueinander gleiche oder voneinander verschiedene Bedeutungen haben und jedes den Rest einer Diazokomponente mit der Bedeutung von mindestens einem der Ansprüche 6 und 7 besitzt und von denen mindestens eine eine faserreaktive Gruppe der in Anspruch 4 genannten und definierten allgemeinen Formel (3) gebunden enthält und M ein Wasserstoffatom oder ein Alkalimetall bedeutet.

12. Verfahren nach Anspruch 1 oder 3, dadurch gekennzeichnet, daß die Verbindung der Formel (1) eine Verbindung der allgemeinen Formel (16a)

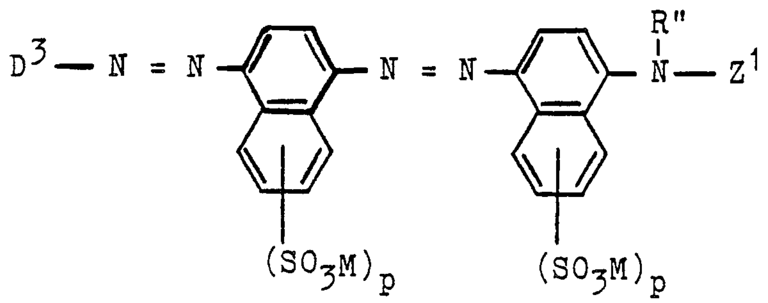

(16a)

ist, in welcher
$D^3$ einen Rest der allgemeinen Formel (10a) oder (10b)

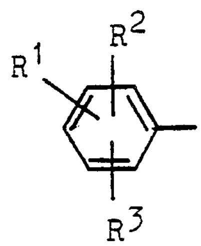

(10a)

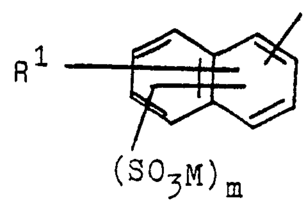

(10b)

ist, in welchen
$R^1$ ein Wasserstoffatom, eine Sulfogruppe oder eine Gruppe der allgemeinen Formel $-SO_2-Y$ mit Y der in Anspruch 1 oder 3 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
m die Zahl Null, 1, 2 oder 3 bedeutet und
M ein Wasserstoffatom oder ein Alkalimetall ist,
$R''$ die in Anspruch 1 oder 3 genannte Bedeutung besitzt,
p für die Zahl Null, 1 oder 2 steht und
$Z^1$ einen Rest der allgemeinen Formel (3a)

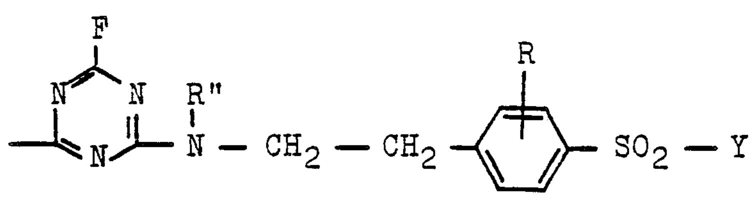

(3a)

mit $R''$, R und Y der in Anspruch 1 oder 3 angegebenen Bedeutung darstellt.

13. Verfahren nach Anspruch 5, dadurch gekennzeichnet, daß n für die Zahl 1 steht und Z an K gebunden ist und D einen Rest der allgemeinen Formel

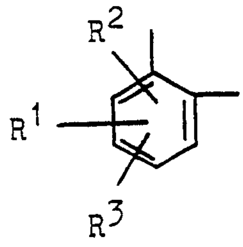

oder

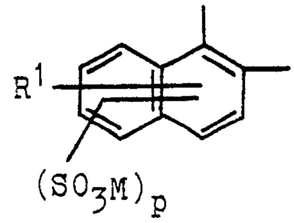

bedeutet, in welchen $R^1$, $R^2$, $R^3$, p und M die in Anspruch 6 genannten Bedeutungen haben, oder daß Z an D gebunden ist und D einen Rest der allgemeinen Formel

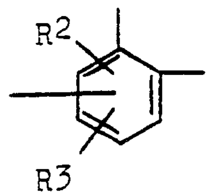

mit $R^2$ und $R^3$ der in Anspruch 6 genannten Bedeutung ist.

14. Verfahren nach Anspruch 13, dadurch gekennzeichnet, daß Z an K gebunden ist und -K-Z ein Rest der allgemeinen Formel

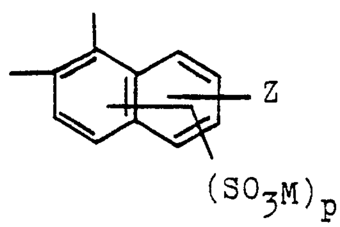

ist, oder daß Z an D gebunden ist und K einen Rest der allgemeinen Formel

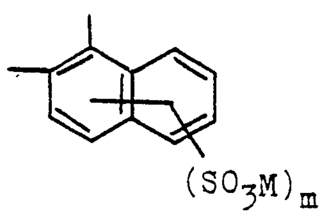

oder

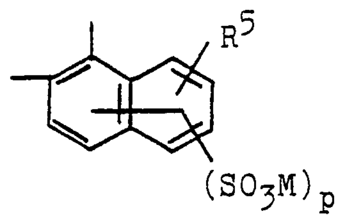

oder

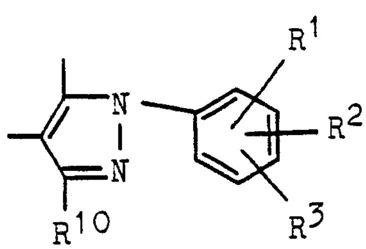

bedeutet, in welchen M, m, p, $R^5$, $R^{10}$, $R^1$, $R^2$ und $R^3$ die in Anspruch 8 genannten Bedeutungen haben.

15. Verfahren nach mindestens einem der Ansprüche 1 bis 14, dadurch gekennzeichnet, daß Y für die ß-Sulfatoethyl-Gruppe steht.

16. Verfahren nach mindestens einem der Ansprüche 1 bis 15, dadurch gekennzeichnet, daß R für ein

Wasserstoffatom steht.

17. Verwendung einer Verbindung entsprechend der Formel (1) von mindestens einem der Ansprüche 1 bis 16 zum Färben und Bedrucken von hydroxy- und/oder carbonamidgruppenhaltigem Material, insbesondere Fasermaterial.

18. Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff eine Verbindung entsprechend der allgemeinen Formel (1) von mindestens einem der Ansprüche 1 bis 16 verwendet.

Europäisches Patentamt

# EUROPÄISCHER RECHERCHENBERICHT

Nummer der Anmeldung

EP 89 11 3740

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 040 790 (HOECHST)<br>* Beispiele 18,19,26 * & US-A-4 515 598 (Kat. D)<br>--- | 1,3 | C 09 B 62/08<br>C 09 B 62/507<br>D 06 P 1/38 |
| Y | EP-A-0 212 264 (HOECHST)<br>* Ansprüche * & DE-A-3 526 551 (Kat. D) | 1,3 | |
| A | --- | 2,4-19 | |
| D,Y | DE-A-3 628 090 (BASF)<br>* Beispiele 5,6,9,12; Ansprüche 1,2 * | 1,3 | |
| A | ----- | 2,4-19 | |
| | | | RECHERCHIERTE SACHGEBIETE (Int. Cl.5) |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 09-11-1989 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)